# EUROPEAN PATENT SPECIFICATION

(11) **EP 2 535 379 B1**
(45) Date of publication and mention of the grant of the patent: **16.05.2018**
(21) Application number: 12169756.9
(22) Date of filing: 29.05.2012
(51) Int. Cl.: C09D 11/54, C09D 11/322, C09D 11/40

(54) **Ink set and image forming method**
Tintensatz und Bilderzeugungsverfahren
Jeu d'encre et procédé de formation d'images

(30) Priority: 17.06.2011 JP 2011135773
(43) Date of publication of application: 19.12.2012
(73) Proprietor: Fujifilm Corporation, Minato-ku Tokyo (JP)
(72) Inventor: Takeda, Akira, Kanagawa (JP); Fukagawa, Reiko, Kanagawa (JP); Arai, Takuya, Kanagawa (JP); Saito, Ryo, Kanagawa (JP)
(74) Representative: Hoffmann Eitle

(56) References cited:
- EP-A2- 1 132 438
- US-A1- 2006 293 410
- US-A1- 2010 295 891

## Description

### BACKGROUND OF THE INVENTION

### Field of the Invention

The invention relates to an ink set and an image forming method.

### Description of the Related Art

A recording method using an ink-jet method has been widely used because a high definition image may be recorded on various recording media by ejecting ink droplets from many nozzle holes formed on an ink jet head.

In image recording by the ink-jet method, an image recording method that includes bringing a pigment ink into contact with a treatment liquid which aggregates a component in the pigment ink to form an image is used in some cases. A combination of the pigment ink and the treatment liquid is referred to as an "ink set".

For example, as an ink set capable of forming a uniform image with a uniform dot diameter, an ink set which includes a pigment ink and a treatment liquid containing at least one of polyvalent organic acid, polyphosphoric acid, or metaphosphoric acid is known (e.g., see Japanese Patent Application Laid-Open (JP-A) No. 2010-188661).

As an ink set capable of suppressing ink spread in an image and the occurrence of mixed colors, while suppressing curling and cockle caused by recording, an ink set which includes an ink composition containing a coloring agent, resin particles, a water soluble organic solvent, and water; an aggregating agent which aggregates the component in the ink composition; and a treatment liquid containing a water-soluble polymer which does not aggregate the component in the ink composition, is known (e.g., see JP-ANo. 2010-23339).

As an ink set for ink jet recording which is excellent in ink aggregation property and capable of recording at a higher speed than the conventional speed, an ink set for ink jet recording which includes an ink composition containing a color material and self-dispersible resin particles, and a treatment liquid containing a cationic polymer and capable of forming an aggregate by contact with the ink composition, is known (e.g., see JP-A No. 2010-58374).

As an ink set which is excellent in ink aggregation property and capable of recording an image with excellent rubfastness and drawing properties at a higher speed than the conventional speed, an ink set which includes an ink composition containing a pigment, resin particles, and a water-soluble polymerizable compound which is polymerized by an active energy ray; and a treatment liquid containing an aggregating agent which aggregates the component in the ink composition and a water-soluble polymerizable compound which is polymerized by an active energy ray, is known (e.g., see JP-A No. 2010-69805).

US-A-2006/0293410 teaches an ink set for inkjet printing comprising an ink containing at least a colorant, a water-soluble organic solvent and water, and a processing liquid containing at least a component having the function of aggregating or insolubilizing a component in the ink, a water-soluble solvent and water, wherein at least one of the ink and the processing liquid further contains a non-linear polymer.

US-A-2010/0295891 discloses an image forming method comprising applying a pretreatment liquid to a recording medium; and discharging an inkjet recording ink dropwise according to an image signal to form an image on the recording medium on which the pretreatment liquid has been applied, wherein: the recording medium is regular paper which has no coat layer; the pretreatment liquid comprise a cationic polymer compound, a first surfactant, water, and a water-soluble organic acid; the inkjet recording ink comprises a water-dispersible colorant, a water-soluble organic solvent, a second surfactant, a penetrating agent and water; and the pretreatment liquid has a static surface tension of 20 mN/m to 30 mN/m.

EP-A-1 132 438 discloses an ink-jet printing process including a process of recording images on a recording medium, said process comprising the steps of: (i) applying an ink on a recording medium by employing an ink-jet recording process, and (ii) applying a treating liquid capable of reacting with the ink; wherein said ink contains a first pigment and a second pigment dispersed in an aqueous medium, said first pigment being selected from a self-dispersing pigment having at least one anionic group bonded directly or through another atomic group to the surface of the first pigment and a self-dispersing pigment having at least one cationic group bonded directly or through another atomic group to the surface of the first pigment and said second pigment being capable of being dispersed in an aqueous medium by a polymer dispersant, said ink further containing at least one dispersant selected from the group consisting of polymer dispersants having the same polarity as that of the group bonded to the surface of said first pigment and nonionic polymer dispersants, and wherein said step (i) is conducted subsequently to said step (ii) so as to bring said ink and said treating liquid into contact with each other in a liquid state on said recording medium.

### SUMMARY

The ink sets described in the patent literature may result in graininess or reduced uniformity of an image formed therewith. One reason for the graininess of the image and the reduction of uniformity is considered to be insufficient spread of ink droplets applied to the recording medium due to an excessively high aggregation speed.

The invention has been made in view of these circumstances. The invention can provide an ink set capable of forming an image with excellent uniformity in which graininess of image is suppressed and an image forming method.

The inventors found that an inclusion of a specific polymer compound which has a structural unit having an ionic group in a treatment liquid in an image forming system which uses an ink composition containing a pigment and the treatment liquid, which containing an organic acidic compound, the aggregation speed may suppressed to a certain extent so that the spread of ink droplets can be promoted, and graininess or reduced uniformity of an image can be suppressed.

According to a first aspect, the present invention provides an ink set comprising: an ink composition comprising a pigment; and a treatment liquid comprising an organic acidic compound and a polymer compound comprising a structural unit represented by the following Formula (A) and a structural unit represented by the following Formula (B): 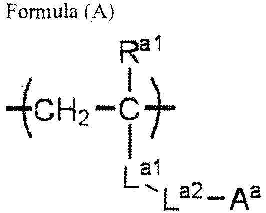 wherein, in Formula (A), R^{a1} represents a hydrogen atom; L^{a1} represents -COO- or -CONH-; L^{a2} represents an alkylene group having 1 to 12 carbon atoms; and A^{a} represents a carboxyl group or a salt thereof or a sulfonic group or a salt thereof; 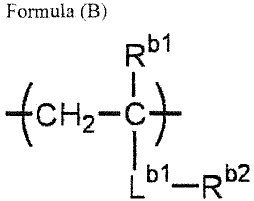 wherein, in Formula (B), R^{b1} represents a hydrogen atom or a methyl group; L^{b1} represents -COO-; and R^{b2} represents a linear aliphatic hydrocarbon group having 1 to 12 carbon atoms, a branched aliphatic hydrocarbon group having 3 to 12 carbon atoms, an alicyclic hydrocarbon group having 3 to 12 carbon atoms, an aralkyl group having 7 to 12 carbon atoms or an aryloxyalkyl group having 7 to 12 carbon atoms.

According to a second aspect, the present invention provides an image forming method comprising: applying a treatment liquid to a recording medium; and applying an ink composition to the recording medium to which the treatment liquid has been applied, the treatment liquid and the ink composition being those comprised in the ink set as defined in the above first aspect.

### DETAILED DESCRIPTION

### Ink set

The ink set of one aspect of the invention includes at least an ink composition and a treatment liquid. The ink composition contains at least a pigment (hereinafter simply referred to as "ink"). The treatment liquid contains at least an organic acidic compound and a polymer compound containing structural units represented by the following Formulae (A) and (B) (hereinafter also referred to as "specific polymer compound").

Recently, from the viewpoints of the fixability of an image and improvement in the aggregation speed, an image is formed by using the ink composition containing a pigment and the treatment liquid containing an organic acidic compound, and aggregating a component in the ink composition with the organic acidic compound in the treatment liquid.

However, if an image is formed by the method, it is found that graininess may occur in the formed image or the uniformity of the formed image may be reduced. One reason for the graininess of the image and the reduction in the image uniformity is considered to be insufficient spread of ink droplets applied to the recording medium due to too high aggregation speed.

If the polymer compound containing the structural unit represented by Formula (A) is contained in the treatment liquid and the ink set has the configuration, the aggregation speed may be suppressed to a certain extent and the spread of ink droplets applied to the recording medium may be facilitated (the size of ink droplets may be increased to a target size). Consequently, the graininess of the image and the reduction in the image uniformity may be suppressed.

The reason why the effect is obtained is assumed as follows. However, the invention is not limited to the following reason.

The specific polymer compound retains an affinity with a solvent (for example, water) in the treatment liquid by the effect of an ionic group at a side chain portion (A^{a} of the following Formula (A)). On the other hand, in the treatment liquid applied on the recording medium, the specific polymer compound is considered to be present near the surface of the treatment liquid (near the side apart from the recording medium) by mainly the effect of a main chain portion and a side chain portion except an ionic group. If the ink composition is applied to the treatment liquid on the recording medium in the state, the permeation of the treatment liquid into the ink composition is prevented to a certain extent by the specific polymer compound present near the surface of the treatment liquid. As a result, the aggregation speed of the ink composition by the organic acidic compound is suppressed to a certain extent.

Conventionally, there has been a case where the water-soluble polymer is contained in the treatment liquid. If a polymer compound which does not contain the structural unit represented by Formula (A) (e.g. polyvinyl alcohol, polyacrylamide, polyvinyl pyrrolidone, and polyethylene glycol) is only contained in the treatment liquid, the effect like the ink set according to one aspect of the invention is not obtained. The reason is assumed to be as follows. In a case where the hydrophilicity of the water-soluble polymer is too high, the water-soluble polymer is permeated in the treatment liquid applied on the recording medium.

Hereinafter, the treatment liquid and the ink composition in the ink set will be explained.

### <Treatment liquid>

The treatment liquid contains an organic acidic compound and a polymer compound containing the structural units represented by the following Formulae (A) and (B) (hereinafter also referred to as "specific polymer compound"). The component in the ink composition, such as a pigment may be aggregated with the organic acidic compound. The aggregation speed may be suppressed to some extent by the specific polymer compound and the spread of ink droplets may be ensured.

The organic acidic compound and the specific polymer compound may be composed of only one compound or two or more compounds.

### (Polymer compound containing the structural units represented by Formulae (A) and (B) (specific polymer compound))

The specific polymer compound contains at least one structural unit represented by the following Formula (A). The structural unit represented by the following Formula (A) is a hydrophilic structural unit.

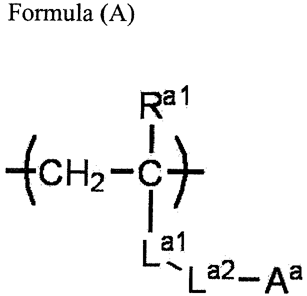

In Formula (A), R^{a1} represents a hydrogen atom; L^{a1} represents -COO- or -CONH-; L^{a2} represents an alkylene group having 1 to 12 carbon atoms; and A^{a} represents a carboxyl group or a salt thereof or a sulfonic group or a salt thereof.

L^{a1} preferably represents -CONH-.

The structural unit represented by Formula (A) may be a structural unit derived from a monomer having an ionic group or a structural unit formed by forming a main chain (stem polymer) and introducing an ionic group. From the viewpoints of production efficiency and stability, it is preferably a structural unit derived from a monomer having an ionic group. The "structural unit (of a polymer) derived from a (specific) monomer" herein means a unit that has a structure which is incorporated into the polymer by employing the (specific) monomer as that to be polymerized for forming the polymer.

As the monomer having an ionic group, normally used monomers may be used without particular restrictions.

Specific examples of monomers having an anionic group as the ionic group include monomers having a carboxyl group, such as acrylic acid, methacrylic acid, crotonic acid, itaconic acid, maleic acid, fumaric acid, citraconic acid, and 2-methacryloyloxy methylsuccinic acid.

Examples of monomers having a sulfonic group include styrene sulfonic acid, 2-acrylamide-2-methylpropanesulfonic acid, 3-sulfopropyl(meth)acrylate, and bis-(3-sulfopropyl)-itaconate.

The content of the structural unit represented by Formula (A) may be, for example, from 10 to 100% by mass, preferably from 10 to 90% by mass, more preferably from 10 to 70% by mass, still more preferably 10 to 50% by mass, and much more preferably from 20 to 40% by mass based on the total mass of a specific polymer compound.

From the viewpoint of exerting the effect more effectively, as the combinations of the groups in Formula (A), a combination in which L^{a1} represents -CONH-, L^{a2} represents an alkylene group having 3 to 4 carbon atoms, and A^{a} represents at least one selected from the group consisting of a sulfonic group and salts thereof is preferable, a combination in which L^{a2} represents an alkylene group having 4 carbon atoms, and A^{a} represents at least one selected from the group consisting of salts of sulfonic acid is much more preferable.

Hereinafter, specific examples of the structural unit represented by Formula (A) will be shown, however, the invention is not limited to the following specific examples. In the following specific examples, a carboxyl group and a sulfonic group may be salts.

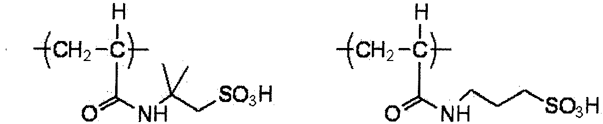

The specific polymer compound contains at least one structural unit represented by the following Formula (B) in addition to the structural unit represented by Formula (A). The structural unit represented by the following Formula (B) is a hydrophobic structural unit.

The configuration allows the spread of ink droplets to be facilitated. Thus, the graininess of image and a decrease in image uniformity may be effectively suppressed (namely, the effect is efficiently exerted by a lower content of the specific polymer compound). It is assumed that the reason why the effect is obtained is because the specific polymer compound includes the structural unit represented by Formula (B) and thus the specific polymer compound is more likely present on the treatment liquid surface.

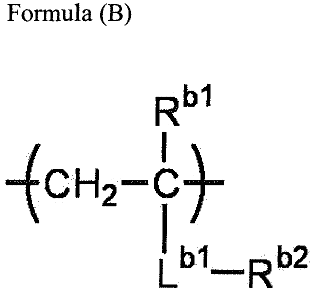

In Formula (B), R^{b1} represents a hydrogen atom or a methyl group; L^{b1} represents -COO-; and R^{b2} represents a linear aliphatic hydrocarbon group having 1 to 12 carbon atoms, a branched aliphatic hydrocarbon group having 3 to 12 carbon atoms, an alicyclic hydrocarbon group having 3 to 12 carbon atoms, an aralkyl group having 7 to 12 carbon atoms or an aryloxyalkyl group having 7 to 12 carbon atoms.

R^{b1} may preferably represent a methyl group.

In embodiments, the number of carbon atom(s) of the aliphatic hydrocarbon group of R^{b2} is from 1 to 12, more preferably from 1 to 8, further preferably from 1 to 6, and further more preferably from 1 to 4, in the case that the aliphatic hydrocarbon group do not contain a ring structure or a branched structure. In embodiments, the number of carbon atom(s) of the aliphatic hydrocarbon group of R^{b2} is from 3 to 12, more preferably from 6 to 12, and further preferably from 6 to 10, in the case that the aliphatic hydrocarbon group contains a ring structure. In embodiments, the number of carbon atom(s) of the aliphatic hydrocarbon group of R^{b2} is from 3 to 12, more preferably from 6 to 12, and further preferably from 6 to 10, in the case that the aliphatic hydrocarbon group contains a branched structure.

In embodiments, the number of carbon atom(s) of the aromatic hydrocarbon group of R^{b2} may be preferably from 6 to 10, and further more preferably 6.

In embodiments, the number of carbon atom(s) of the group composed of a combination of the aliphatic hydrocarbon group and the aromatic hydrocarbon group of R^{b2} is from 7 to 12, and preferably from 7 to 9.

R^{b2} may preferably represent an aliphatic hydrocarbon group (i.e., a linear or branched aliphatic hydrocarbon group or an aliphatic hydrocarbon group having an alicyclic structure); a group composed of a combination of an aliphatic hydrocarbon group and an aromatic hydrocarbon group (preferably an aralkyl group); a monovalent group in which at least one of an ether bond, a thioether bond, or an ester bond is linked to at least one aromatic hydrocarbon group (preferably an aryloxy group); or a monovalent group in which an aliphatic hydrocarbon group and an aromatic hydrocarbon group are linked by at least one of an ether bond, a thioether bond, or an ester bond (preferably an aryloxyalkyl group).

R^{b2} may more preferably represent an aliphatic hydrocarbon group (i.e., a linear or branched aliphatic hydrocarbon group or an aliphatic hydrocarbon group having an alicyclic structure); a group composed of a combination of an aliphatic hydrocarbon group and an aromatic hydrocarbon group (preferably an aralkyl group); or a monovalent group in which an aliphatic hydrocarbon group and an aromatic hydrocarbon group are linked by at least one of an ether bond, a thioether bond, or an ester bond (preferably an aryloxyalkyl group).

R^{b2} may still more preferably represent a group composed of a combination of an aliphatic hydrocarbon group and an aromatic hydrocarbon group (preferably an aralkyl group); or a monovalent group in which an aliphatic hydrocarbon group and an aromatic hydrocarbon group are linked by at least one of an ether bond, a thioether bond, or an ester bond (preferably an aryloxyalkyl group).

R^{b2} may further preferably represent a group composed of a combination of an aliphatic hydrocarbon group and an aromatic hydrocarbon group (preferably an aralkyl group).

Specific examples of the group reprsented by R^{b2} which may be preferable from the viewpoint of exerting the effect more efficiently include a branched aliphatic hydrocarbon group having 3 to 12 carbon atoms, an alicyclic hydrocarbon group having 3 to 12 carbon atoms, an aralkyl group having 7 to 12 carbon atoms, and an aryloxyalkyl group having 7 to 12 carbon atoms. Still more preferable examples thereof include an aralkyl group having 7 to 12 carbon atoms and an aryloxyalkyl group having 7 to 12 carbon atoms. Further preferable examples thereof include an aralkyl group having 7 to 12 carbon atoms is much more preferable.

Preferable examples of the combination of the groups in Formula (B) include a combination in which R^{b1} represents a methyl group, L^{b1} represents -COO-, and R^{b2} represents a branched aliphatic hydrocarbon group having 3 to 12 carbon atoms, an alicyclic hydrocarbon group having 3 to 12 carbon atoms, an aralkyl group having 7 to 12 carbon atoms or an aryloxyalkyl group having 7 to 12 carbon atoms. Further preferable examples thereof include a combination in which R^{b1} represents a methyl group, L^{b1} represents -COO-, and R^{b2} represents an aralkyl group having 7 to 12 carbon atoms or an aryloxyalkyl group having 7 to 12 carbon atoms.

The structural unit represented by Formula (B) is preferably a structural unit derived from the following monomers.

That is, specific examples of monomers constituting the structural unit represented by Formula (B) include methyl(meth)acrylate, ethyl(meth)acrylate, n-propyl(meth)acrylate, isopropyl(meth)acrylate, n-butyl(meth)acrylate, isobutyl(meth)acrylate, sec-butyl(meth)acrylate, tert-butyl(meth)acrylate, amyl(meth)acrylate, hexyl(meth)acrylate, 2-ethylhexyl(meth)acrylate, octyl(meth)acrylate, tert-octyl(meth)acrylate, stearyl(meth)acrylate, 2-chloroethyl(meth)acrylate, 2-bromoethyl(meth)acrylate, 4-chlorobutyl(meth)acrylate, cyanoethyl(meth)acrylate, 2-acetoxyethyl(meth)acrylate, benzyl(meth)acrylate, chlorobenzyl(meth)acrylate, methoxybenzyl(meth)acrylate, 2-chlorocyclohexyl(meth)acrylate, cyclohexyl(meth)acrylate, norbornyl(meth)acrylate, isobornyl(meth)acrylate, furfuryl(meth)acrylate, tetrahydrofurfuryl(meth)acrylate, phenyl(meth)acrylate, cresyl(meth)acrylate, naphthyl(meth)acrylate, 2-phenoxyethyl(meth)acrylate, 2-hydroxyethyl(meth)acrylate, 4-hydroxybutyl(meth)acrylate, 5-hydroxypentyl(meth)acrylate, 2,2-dimethyl-3-hydroxypropyl(meth)acrylate, triethyleneglycol mono(meth)acrylate, dipropyleneglycol mono(meth)acrylate, 2-methoxyethyl(meth)acrylate, 3-methoxybutyl(meth)acrylate, 2-ethoxyethyl(meth)acrylate, methoxydiethylene glycol (meth)acrylate, 2-iso-propoxyethyl(meth)acrylate, 2-butoxyethyl(meth)acrylate, 2-(2-methoxyethoxy)ethyl(meth)acrylate, 2-(2-ethoxyethoxy)ethyl(meth)acrylate, 2-(2-butoxyethoxy)ethyl(meth)acrylate, 2-(3-phenylpropyloxy)ethyl(meth)acrylate, 2-acetoxyethylmethacrylate, 2-acetoacetoxylethylmethacrylate, allylmethacrylate, glycidylmethacrylate, 1-bromo-2-methoxyethyl acrylate, 1,1-dichloro-2-ethoxyethyl acrylate, 2,2,2-tetrafluoroethyl acrylate, and 1H,1H,2H,2H-perfluorodecyl acrylate.

Here, (meth)acrylate means acrylate or methacrylate.

In order to allow the specific polymer compound to be present near the surface of the treatment liquid applied on the recording medium, the fluidity is considered to be preferably low at the time of heating and drying the treatment liquid. Thus, it is preferable that the specific polymer compound has a high glass transition temperature, generally correlated with the softening temperature of the polymer compound. From such viewpoints, as the monomer forming the structural unit represented by Formula (B), methacrylate is more preferable than acrylate.

In a condition where the specific polymer compound contains one or two or more kinds of the structural units represented by Formula (B), the total content of the structural units may be, for example, from 10 to 90% by mass, preferably from 30 to 90% by mass, more preferably from 50 to 90% by mass, and still more preferably from 60 to 80% by mass based on the total mass of the specific polymer compound.

The specific polymer compound contains at least one kind of the structural units represented by Formula (B) and the structural units represented by Formula (A). From the viewpoint that "hydrophilicity" and "properties present near the surface of the treatment liquid" of the specific polymer compound are easily controlled by adjustment of the composition ratio of the structural unit, it is more preferable to contain three or more structural units selected from the group consisting of the structural units represented by Formula (A) and the structural units represented by Formula (B).

The specific polymer compound may contain structural units other than the structural unit represented by Formula (A) and the structural unit represented by Formula (B), if necessary.

Examples of other structural units include structural units other than the structural unit represented by Formula (A) and the structural unit represented by Formula (B) of structural units derived from known vinyl monomers.

The weight-average molecular weight of the specific polymer compound is not particularly limited. For example, the weight-average molecular weight may be from 10000 to 100000, preferably from 20000 to 80000, and more preferably from 30000 to 80000.

The specific polymer compound is preferably a water-soluble polymer.

Here, the term "water-soluble" means that the compound may be dissolved in water at a certain concentration or more. Any compound that dissolves in an aqueous treatment liquid (desirably, uniformly) may be usable. Specifically, the solubility to water at 25°C is preferably 5% by mass or more, and more preferably 10% by mass or more.

There are no particular limitations on the content of the specific polymer compound in the treatment liquid. The content may be preferably from 0.1 to 10% by mass, and more preferably from 0.1 to 4% by mass based on the total amount of the treatment liquid.

If the content is 0.1% by mass or more, the spread of ink droplets may be further facilitated. If the content is 10% by mass or less, thickening of the treatment liquid may be further suppressed.

The specific polymer compound may be synthesized by co-polymerizing monomer components including a monomer which forms the structural unit represented by Formula (A) and a monomer which forms the structural unit represented by Formula (B) by any polymerization method, examples of which including solution polymerization, precipitation polymerization, suspension polymerization, bulk polymerization, or emulsion polymerization.

The polymerization reaction may be carried out using any known procedure such as in a batch manner, a semi-continuous manner, or a continuous manner. The method of initiating polymerization may be, for example, a method using a radical initiator, a method of irradiating light or a radiation, or the like. The methods of polymerization and the methods of initiation of polymerization are described in, for example, "Kobunshi Gosei Hoho (Polymer Synthesis Method)" written by Teiji Tsuruta, revised edition (published by Nikkan Kogyo Shimbun, Ltd., 1971) and "Kobunshi Gosei no Jikkenho (Experimental Technique of Polymer Science)" written by Takayuki Ohtu and Masaetu Kinoshita (published by Kagaku-Dojin Publishing Company Inc., 1972), pages 124 to 154.

Among these polymerization methods, a solution polymerization method using a polymerization initiator such as a radical initiator may be particularly preferable. Examples of a solvent used in the solution polymerization method include various organic solvents such as ethyl acetate, butyl acetate, acetone, methyl ethyl ketone, methyl isobutyl ketone, cyclohexanone, tetrahydrofuran, dioxane, N,N-dimethylformamide, N,N-dimethylacetamide, benzene, toluene, acetonitrile, methylene chloride, chloroform, dichloroethane, methanol, ethanol, 1-propanol, 2-propanol, and 1-butanol. These solvents may be used alone or in a combination of two or more of them. In embodiments, the solvent may be mixed with water to be a mixure solution.

The polymerization temperature should be set in consideration of the molecular weight of the polymer to be produced, the kind of initiator, and/or the like. The polymerization temperature may be usually from about 0°C to about 100°C, and it may be preferable that the polymerization is carried out at a temperature within a range of from 50°C to 100°C. The reaction time may be from about one hour to about 30 hours. The resulting resin may be subjected to purification such as reprecipitation.

Specific examples of the specific polymer compound (exemplary compounds A-9 to A-29) are shown below, although the invention is not limited thereby.

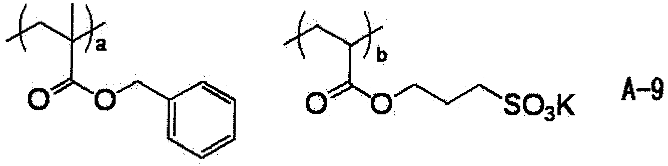

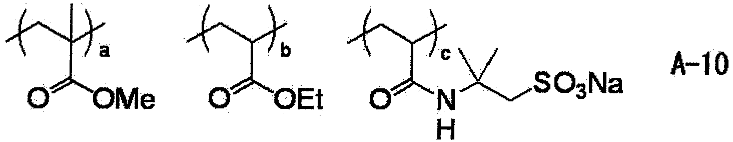

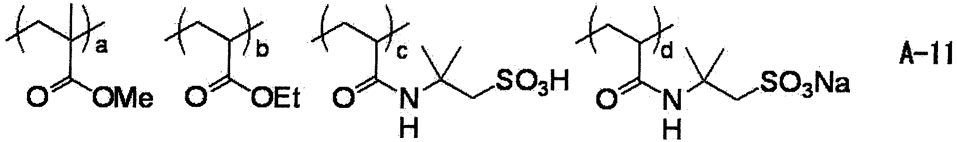

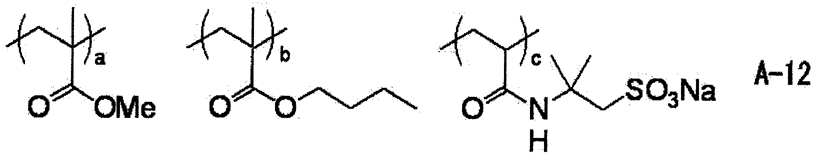

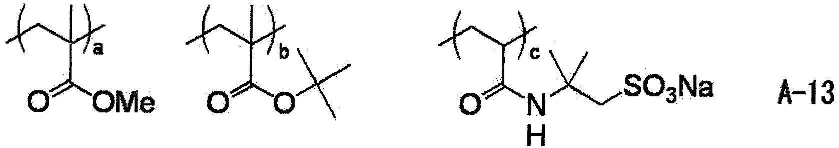

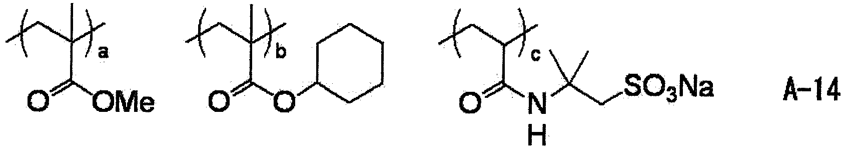

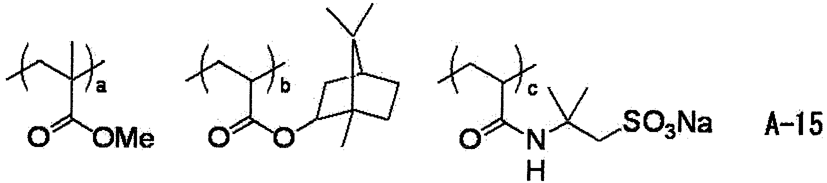

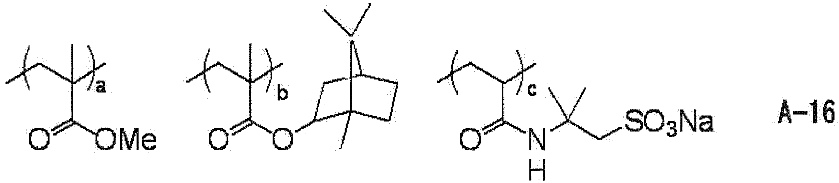

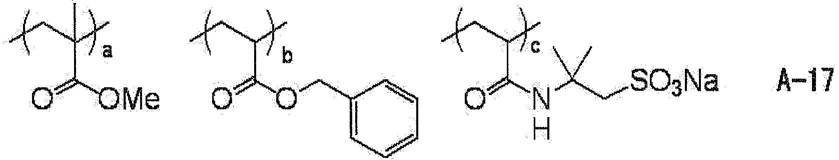

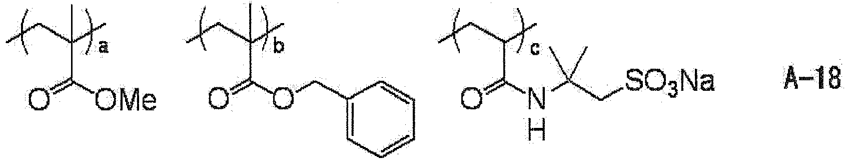

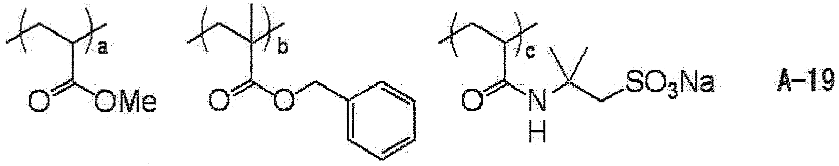

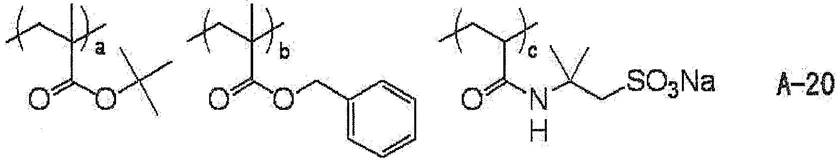

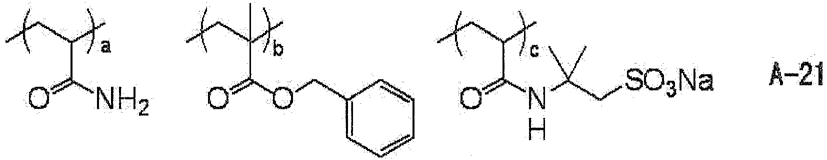

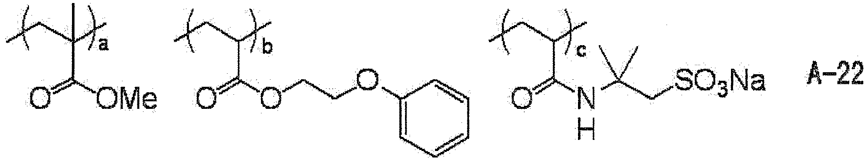

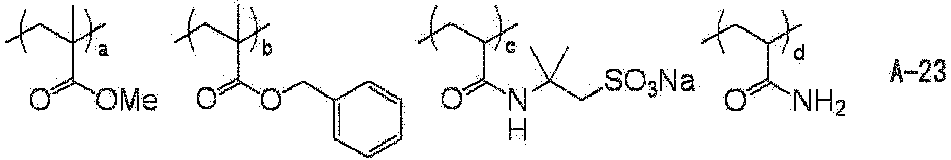

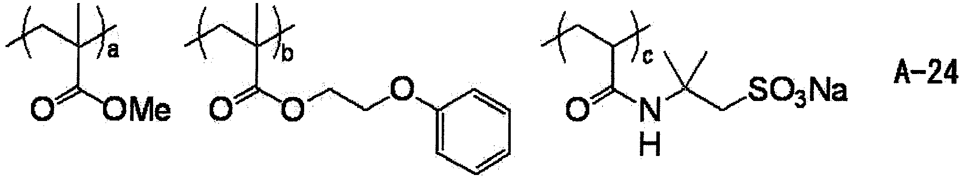

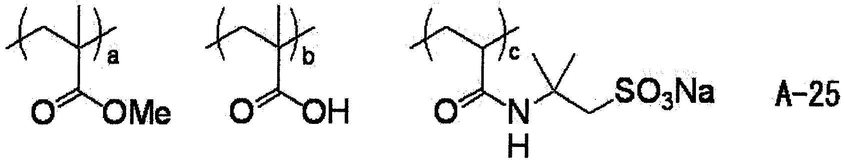

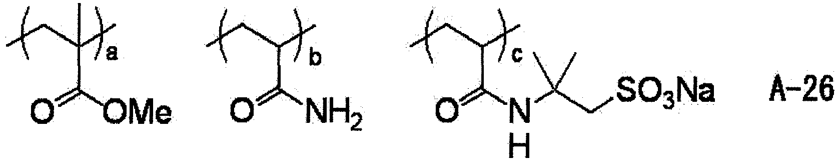

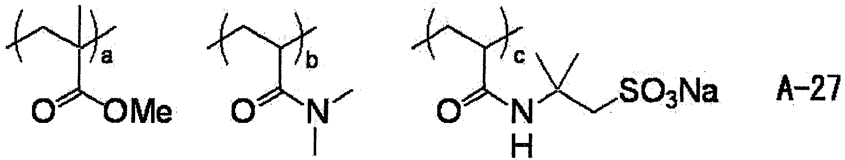

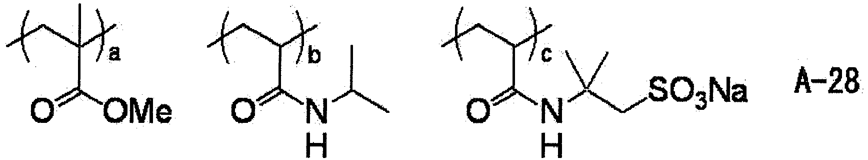

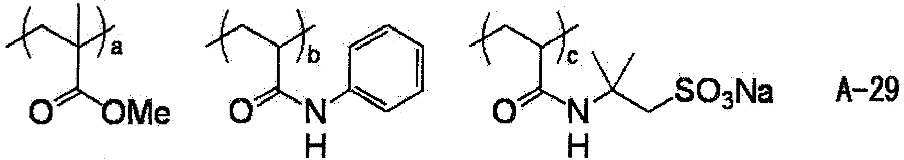

In the exemplary compounds A-9 to A-29, a, b, c, and d represent content ratios (% by mass) of the respective structural units based on the total mass of the exemplary compounds. The sum of a, b, c, and d (that is, a+b+c+d) is 100.

In the exemplary compounds A-9 to A-29, those having a combination in which a is from 0 to 73, b is from 0 to 90, c is from 10 to 90, and d is from 0 to 90 may be preferable.

Specific examples of the combination of a, b, c, and d (shown in the form of "a/b/c/d") in the exemplary compounds A-9 to A-29 include 5/5/90/0, 33/33/34/0, 17/50/33/0 50/17/33/0, 40/10/30/0, 56/17/27/0, 60/13/27/0, 70/3/27/0, 90/0/10/0, 73/0/27/0, 50/0/50/0, 20/0/80/0, 5/0/90/0, 0/90/10/0, 0/77/23/0, 0/50/50/0, 0/20/80/0, 40/30/27/3, 34/30/27/9, 18/40/27/15.

### (Organic acidic compound)

The treatment liquid contains at least one kind of organic acidic compounds. This enables the ink composition to be aggregated.

In embodiments, at least one polyvalent organic acid may be used as the organic acidic compound.

As the polyvalent organic acid, a compound containing two or more carboxyl groups in a molecule may be preferable.

Preferable examples of the compound containing two or more carboxyl groups in a molecule include tartaric acid, phthalic acid, 4-methylphthalic acid, D-malic acid, L-malic acid, malonic acid, glutaric acid, dimethylmalonic acid, and maleic acid.

More preferable examples include D-malic acid, L-malic acid, malonic acid, glutaric acid, dimethylmalonic acid, and maleic acid. These compounds may be used alone or in combination of two or more kinds thereof.

As the polyvalent organic acid, a compound represented by the following Formula (I) may be also preferable. The use of this compund may further increase the aggregation property so that the movement of ink droplets applied on the recording medium may be suppressed.

CₙH₂ₙ₊₂₋ₘ(COOH)ₘ ... Formula (I)

In Formula (I), n represents an integer of 2 or more and m represents an integer of 3 or more.

In Formula (I), n may preferably represent an integer from 3 to 5. If n is 3 or more, the graininess of the image may be further suppressed. If n is 5 or less, scuff resistance of the image (physical strength of the image; the same shall apply hereinafter) may be further improved.

In Formula (I), m may preferably represent an integer from 3 to 5. If m is 3 or more, the movement of ink droplets may be further suppressed. If m is 5 or less, scuff resistance of the image may be further improved.

Specific examples of the compound represented by Formula (I) include 1,2,3-propanetricarboxylic acid, 1,3,5-pentanetricarboxylic acid, and 1,2,3,4-butanetetracarboxylic acid.

There are no particular restrictions on the content of all the organic acidic compounds contained in the treatment liquid. From the viewpoints of the aggregation property of ink by mass, more preferably from 5 to 25% by mass, and still more preferably from 10 to 20% by mass based on the total amount of the treatment liquid.

In a case where the organic acidic compound contains a compound represented by Formula (I), the content is not particularly restricted. In a preferable embodiment, the content of the organic acidic compound may be from 5 to 30% by mass based on the total amount of the organic acidic compound.

### (Phosphoric acid, phosphoric acid compound)

The treatment liquid may contain, as an inorganic acid, phosphoric acid and/or at least one kind of phosphoric acid compounds. The use of the phosphoric acid and/or the phosphoric acid compound may suppress image gloss unevenness. It is considered that the image gloss unevenness is caused by a reaction of a component in the recording medium (e.g. calcium carbonate) with the organic acidic compound in the treatment liquid.

The "phosphoric acid compound" encompasses an oxo acid of phosphorus as well as derivatives thereof. Examples of the derivative include an ester formed by a reaction between an oxo acid of phosphorus and an alcohol and a salt formed by neutralizing an oxo acid of phosphorus using a basic substance. Preferable examples of the salt include a metal ion salt of an oxo acid of phosphorus and an ammonium salt of an oxo acid of phosphorus. Specific examples of the phosphoric acid compound include orthophosphoric acid (hereinafter, simply referred to as "phosphoric acid"), phosphorous acid, hypophosphorous acid, pyrophosphoric acid, metaphosphoric acid, polyphosphoric acid, and salts thereof.

In the treatment liquid, the content of the organic acidic compound based on the sum of the amounts of the organic acidic compound, the phosphoric acid, and the phosphoric acid compound is not particularly restricted. In embodiments, the content may be preferably from 60 % by mass to 90% by mass.

### (Water)

The treatment liquid may preferably contain water. There are no particular restrictions on the content of water. In embodiments, the content may be preferably from 10% by mass to 99% by mass, more preferably from 50% by mass to 90% by mass, and still more preferably from 60 to 80% by mass, based on the amount of the treatment liquid.

### (Organic solvent)

The treatment liquid may preferably contain at least one organic solvent.

The organic solvent may preferably have solubility to water so that 5 g or more of the organic solvent is dissolved in 100 g of water at 20°C (hereinafter, also referred to as "water-soluble organic solvent").

The water-soluble organic solvent contained in the treatment liquid may be similar to those contained in the ink described below. From the viewpoint of suppressing curling, the water-soluble organic solvent may be preferably polyalkylene glycol or derivatives thereof, and more preferably at least one selected from diethylene glycol monoalkyl ether, triethylene glycol monoalkyl ether, dipropylene glycol, tripropylene glycol monoalkyl ether, polyoxypropylene glyceryl ether, and polyoxyethylene polyoxypropylene glycol.

There are no particular restrictions on the content of the organic solvent in the treatment liquid. From the viewpoint of suppressing curling, the content may preferably from 1% by mass to 30% by mass, and more preferably from 5% by mass to 15% by mass, based on the total mass of the treatment liquid.

### (Nitrogen-containing heterocyclic compound and Organic mercapto compound)

The treatment liquid may contain at least one selected from nitrogen-containing heterocyclic compounds and organic mercapto compounds. The graininess of the image may be further suppressed and the scuff resistance of the image and transfer properties of the recording medium may be improved thereby. Among these compounds, the nitrogen-containing heterocyclic compound may be preferably contained in the treatment liquid.

### - Nitrogen-containing heterocyclic compound -

The nitrogen-containing heterocyclic compound preferably has a nitrogen-containing five- or six-membered ring structure, particularly preferably has a nitrogen-containing five-membered ring structure.

As for the nitrogen-containing five- or six-membered ring structure, a five- or six-membered heterocyclic ring structure including at least one atom of a carbon atom, a nitrogen atom, an oxygen atom, a sulfur atom, or a selenium atom is preferable.

In embodiments, the heterocyclic ring may be condensed with a carbon aromatic ring or a heterocyclic aromatic ring.

Examples of the heterocyclic ring include a tetrazole ring, a triazole ring, an imidazole ring, a thiadiazole ring, an oxadiazole ring, a selenadiazole ring, an oxazole ring, a thiazole ring, a benzoxazole ring, a benzthiazole ring, a benzimidazole ring, a pyrimidine ring, a triazaindene ring, a tetraazaindene ring, and a pentaazaindene ring.

These rings may have a substituent. Examples of the substituent include a nitro group, a halogen atom (e.g. a chlorine atom, and a bromine atom), a mercapto group, a cyano group, and an alkyl group (e.g. methyl, ethyl, propyl, t-butyl, and cyanoethyl groups), an aryl group (e.g. phenyl, 4-methanesulfonamidephenyl, 4-methylphenyl, 3,4-dichlorophenyl, and naphthyl groups), an alkenyl group (e.g. an allyl group), an aralkyl group (e.g. benzyl, 4-methylbenzyl, and phenethyl groups), a sulfonyl group (e.g. methanesulfonyl, ethanesulfonyl, and p-toluenesulfonyl groups), a carbamoyl group (e.g. unsubstituted carbamoyl, methylcarbamoyl, and phenylcarbamoyl groups), a sulfamoyl group (e.g. unsubstituted sulfamoyl, methylsulfamoyl, and phenylsulfamoyl groups), a carbonamide group (e.g. acetamide and benzamide groups), a sulfonamide group (e.g. methanesulfonamide, benzenesulfonamide, and p-toluenesulfonamide groups), an acyloxy group (e.g. acetyloxy and benzoyloxy groups), a sulfonyloxy group (e.g. methanesulfonyloxy), a ureido group (e.g. unsubstituted ureido, methylureido, ethylureido, and phenylureido groups), an acyl group (e.g. acetyl and benzoyl groups), an oxycarbonyl group (e.g. methoxycarbonyl and phenoxycarbonyl groups), an oxycarbonylamino group (e.g. methoxycarbonylamino, phenoxycarbonylamino, and 2-ethylhexyloxycarbonylamino groups), and a hydroxyl group, each of which may have a substituent or not. In embodiments, a single ring structure may have plural substituents.

Specific preferable example of the nitrogen-containing heterocyclic compound include imidazole, benzoimidazole, benzoindazole, benzotriazol, tetrazole, benzooxazol, benzothiazole, pyridine, quinoline, pyrimidine, piperidine, piperazine, quinoxaline, and morpholine. These compounds may have a substituent such as an alkyl group, a carboxyl group, or a sulfonic group as described above.

Preferable examples of the nitrogen-containing six-membered ring compound include compounds having a triazine ring, a pyrimidine ring, a pyridine ring, a pyrroline ring, a piperidine ring, a pyridazine ring, or a pyrazine ring. Among these compounds, the compound having a triazine ring and a pyrimidine ring may be more preferable. The nitrogen-containing six-membered ring compound may have a substituent, which may be: an alkyl group having from 1 to 6 carbon atoms, and more preferably 1 to 3 carbon atoms; an alkoxy group having from 1 to 6 carbon atoms, and more preferably from 1 to 3 carbon atoms; a hydroxyl group; a carboxyl group; a mercapto group; an alkoxyalkyl group having from 1 to 6 carbon atoms, and more preferably from 1 to 3 carbon atoms; or a hydroxyalkyl group having from 1 to 6 carbon atoms, and more preferably from 1 to 3 carbon atoms.

Specific preferable examples of the nitrogen-containing six-membered ring compound include triazine, methyltriazine, dimethyltriazine, a hydroxyethyltriazine ring, pyrimidine, 4-methylpyrimidine, pyridine, and pyrroline.

### - Organic mercapto compound -

Examples of the organic mercapto compound include an alkylmercapto compound, an arylmercapto compound and a heterocyclic mercapto compound.

Examples of the alkylmercapto compound include cysteine and thiomalic acid. Examples of the arylmercapto compound include thiosalycilic acid. Examples of the heterocyclic mercapto compound include 2-phenyl-1-mercaptotetrazole, 2-mercaptobenzoimidazole, 2-mercaptobenzothiazole, 2-mercaptobenzoxazole, 2-mercaptopyrimidine, 2,4-dimercaptopyrimidine, and 2-mercaptopyridine. These compounds may have a substituent such as an alkyl group, a carboxyl group, or a sulfo group.

Among the nitrogen-containing heterocyclic compounds and the organic mercapto compounds, benzotriazole, 5-methylbenzotriazole, 5-aminobenzotriazole, 5-chlorobenzotriazole, tetrazole, 5-aminotetrazole, 5-methyltetrazole, and 5-phenyltetrazole may be preferable, and benzotriazole may be more preferable.

One kind of the nitrogen-containing heterocyclic compound or the organic mercapto compound may be used singly or plural kinds thereof may be used in combination.

There are no particular restrictions on the content (total content) of the nitrogen-containing heterocyclic compound and the organic mercapto compound in the treatment liquid. In embodiments, the content may be preferably from 0.1% by mass to 5.0% by mass, and more preferably from 0.1% by mass to 3.0% by mass, based on the total mass of the treatment liquid.

### (Surfactant)

The treatment liquid may contain at least one surfactant. The surfactant may be used as a surface tension adjusting agent. Examples of the surface tension adjusting agent include a nonionic surfactant, a cationic surfactant, an anionic surfactant, and a betaine surfactant.

Among these agents, a nonionic surfactant and an anionic surfactants may be preferable from the viewpoint of the aggregation speed of the ink composition.

In regard to specific examples of the surfactant, preferable hydrocarbon surfactants include: anionic surfactants such as fatty acid salts, alkyl sulfate ester salts, alkyl benzenesulfonates, alkyl naphthalenesulfonates, dialkyl sulfosuccinates, alkyl phosphate ester salts, naphthalenesulfonic acid-formalin condensates, or polyoxyethylene alkyl sulfate ester salts; and nonionic surfactants such as polyoxyethylene alkyl ethers, polyoxyethylene alkyl allyl ethers, polyoxyethylene fatty acid esters, sorbitan fatty acid esters, polyoxyethylene sorbitan fatty acid esters, polyoxyethylene alkylamines, glycerin fatty acid esters, or a oxyethylene-oxypropylene block copolymer. SURFYNOLS (trade name, manufactured by Air Products & Chemicals, Inc.), which is an acetylene polyoxyethylene oxide surfactant, may be also preferably used. Amine oxide amphoteric surfactants such as N,N-dimethyl-N-alkylamine oxide may be also preferable.

Surfactants described in pages 37 to 38 of JP-A No. 59-157636 and Research Disclosure No. 308119 (1989) may be also usable.

Examples of the surfactant further include fluorocarbon (fluorinated alkyl) surfactants, silicone surfactants, and the like, such as those described in JP-A Nos. 2003-322926, 2004-325707, and 2004-309806.

The content of the surfactant is not particularly limited. In embodiments, content may be such that the surface tension of the treatment liquid becomes 40 mN/m or more, more preferably from 40 mN/m to 60 mN/m, and further from 42 mN/m to 50 mN/m.

### Other coagulant

The treatment liquid may contain, in addition to the organic acidic compound, other component for coagulation (coagulant). Examples of the coagulant include a polyvalent metal salt and a polyallylamine.

Examples of the polyvalent metal salt include salts of alkaline earth metals belonging to Group 2 of the periodic table (such as magnesium or calcium), salts of transition metals belonging to Group 3 of the periodic table (such as lanthanum), salts of cations of elements belonging to Group 13 of the periodic table (such as aluminum), salts of lanthanides (such as neodium). Examples of polyallylamine include polyallylamine and polyallylamine derivatives. As the metal salts, carboxylic acid salts (such as salts of formic acid, salts of acetic acid, or salts of benzoic acid), nitric acid salts, chlorides, and thiocyanic acid salts may be preferable. Among them, a calcium salt or a magnesium salt of a carboxylic acid (such as formic acid, acetic acid, or benzoic acid), a calcium salt or a magnesium salt of nitric acid, calcium chloride, magnesium chloride, and a calcium salt or a magnesium salt of thiocyanic acid may be more preferable.

### - Other additives -

The treatment liquid may contain other additives in addition to the above-described components. Details of other additives in the treatment liquid are similar to those in the ink composition described below.

There are no particular restrictions on the surface tension of the treatment liquid. For example, the surface tension may be 40 mN/m or more. From the viewpoint of suppressing the occurrence of curling of the recording medium, the surface tension may be more preferably from 40 mN/m to 60 mN/m, more preferably from 42 mN/m to 50 mN/m, and still more preferably from 42 mN/m to 47 mN/m.

The surface tension of the treatment liquid may be adjusted, for example, by adding a surfactant. The surface tension of the treatment liquid is measured by a plate method using AUTOMATIC SURFACE TENSIOMETER CBVP-Z (trade name, manufactured by Kyowa Interface Science Co., Ltd.) under the condition of 25°C.

The pH (25°C±1°C) of the treatment liquid may be preferably 3.5 or less, more preferably from 0.5 to 2.5, and still more preferably from 0.5 to 2.0 from the viewpoint of the aggregation speed of the ink composition.

The viscosity of the treatment liquid is preferably from 1 mPa·s to 30 mPa·s, more preferably from 1 mPa·s to 20 mPa·s, still more preferably from 2 mPa·s to 15 mPa·s, and much more preferably from 2 mPa·s to 10 mPa·s, from the viewpoint of the aggregation speed of the ink composition. The viscosity is measured under the condition of 25°C using VISCOMETER TV-22 (trade name, manufactured by TOKI SANGYO CO., LTD.).

### <Ink composition>

The ink composition contains a pigment.

The ink composition may further contain resin particles, a pigment dispersant (polymer dispersant), an organic solvent, a neutralizer, water, and/or other components, if necessary.

### (Pigment)

The ink composition contains at least one pigment.

There are no particular restrictions on the kind of the pigment, and conventionally known organic and inorganic pigments may be used. Examples of the pigment include polycyclic pigments such as azo lake, an azo pigment, a phthalocyanine pigment, perylene and a perinone pigment, an anthraquinone pigment, a quinacridone pigment, a dioxazine pigment, a diketopyrrolopyrrole pigment, a thioindigo pigment, an isoindolinone pigment, and a quinophthalone pigment; dye lakes such as a basic-dye lake and an acidic-dye lake; and organic pigments such as a nitro pigment, a nitroso pigment, aniline black, and daylight fluorescent pigments; and inorganic pigments such as titanium oxide, iron oxide-based inorganic pigments, and carbon black-based inorganic pigments. Any pigment may be used as long as it is dispersable in an aqueous phase, even if not described in the Color Index. Pigments which are surface-treated with, for example, a surfactant or a polymer dispersant, or a grafted carbon may also be used.

Among these pigments, preferable examples include an azo pigment, a phthalocyanine pigment, an anthraquinone pigment, a quinacridone pigment, and a carbon black-based pigment.

### - Dispersant -

In one preferale exemplary embodiment of the ink composition, the pigment is dispersed with a dispersant.

Specifically, the pigment may be dispersed with a polymer dispersant, i.e., at least a part of a surface of the pigment may be coated (covered) with the polymer dispersant. Hereinafter, the pigment in which at least a part of a surface thereof is coated with the polymer dispersant is also referred to as a "resin-coated pigment".

The dispersant may be either a polymer dispersant or a low-molecular-weight surfactant dispersant. The polymer dispersant may be either a water-soluble polymer dispersant or a water-insoluble polymer dispersant.

Examples of the low-molecular-weight surfactant-type dispersant include surfactant dispersants described in paragraphs 0016 to 0020 of JP-A No. 2010-188661.

Examples of the water-soluble polymer dispersant include a hydrophilic polymer compound

Examples of the water-soluble polymer dispersant include natural hydrophilic polymer compounds described in paragraphs 0021 to 0022 of JP-A No. 2010-188661.

Examples of the water-soluble polymer dispersant further include a synthetic hydrophilic polymer compound.

Examples of the synthetic hydrophilic polymer compound include vinyl polymers such as polyvinyl alcohol, polyvinylpyrrolidone, and polyvinyl methyl ether; acrylic resins such as polyacrylamide, polyacrylic acid or alkali metal salts thereof, and water-soluble styrene acrylic resins; water-soluble styrene maleic acid resins, water-soluble vinylnaphthalene acrylic resins, water-soluble vinylnaphthalene maleic acid resins, polyvinylpyrrolidone, polyvinyl alcohol, alkali metal salts of β-naphthalenesulfonic acid-formalin condensate, and polymer compounds having, in a side chain, a salt of a quaternary ammonium or a cationic functional group such as an amino group.

Among them, from the viewpoints of the dispersion stability and aggregation property of the pigment, a polymer compound containing a carboxyl group may be preferable, and for example, polymer compounds containing a carboxyl group such as acrylic resins such as a water-soluble styrene acrylic resin, a water-soluble styrene-maleic acid resin, a water-soluble vinylnaphthalene-acrylic resin, and a water-soluble vinylnaphthalene-maleic acid resin may be more preferable.

Examples of the water-insoluble dispersant among the polymer dispersant include a polymer having both a hydrophobic portion and a hydrophilic portion. Examples of the polymer include a styrene-(meth)acrylic acid copolymer, a styrene-(meth)acrylic acid-(meth)acrylic acid ester copolymer, a (meth)acrylic acid ester-(meth)acrylic acid copolymer, a polyethylene glycol (meth)acrylate-(meth)acrylic acid copolymer, and a styrene-maleic acid copolymer.

The styrene-(meth)acrylic acid copolymer, the (meth)acrylic acid ester-(meth)acrylic acid copolymer, the polyethylene glycol (meth)acrylate-(meth)acrylic acid copolymer, and the styrene-maleic acid copolymer may be a bipolymer or a copolymer derived from tree or more species of monomers.

Among these copolymers, preferable examples of the polymer dispersant include a (meth)acrylic acid ester-(meth)acrylic acid copolymer, and more preferable examples thereof include a benzyl-(meth)acrylate-(meth)acrylic acid-methyl(meth)acrylate terpolymer.

Here, the term "(meth)acrylic acid" means acrylic acid or methacrylic acid, and the term "(meth)acrylate" means acrylate or methacrylate.

The weight-average molecular weight of the polymer dispersant may be preferably from 3,000 to 200,000, more preferably from 5,000 to 100,000, still more preferably from 5,000 to 80,000, and much more preferably from 10,000 to 60,000.

There are no particular limitations on the acid value of the polymer dispersant.

From the viewpoint of aggregation property, the acid value of the polymer dispersant may be preferably larger than the acid value of the resin particles described below (preferably self-dispersible resin particles), which may be used if necessary.

In the ink composition, the mass ratio of the pigment and the dispersant (pigment: dispersant) may be preferably from 1:0.06 to 1:3, more preferably from 1:0.125 to 1:2, and still more preferably from 1:0.125 to 1:1.5.

The average particle diameter of the pigment (, which is referred to the average particle diameter of the resin-coated pigment in the case of a resin-coated pigment,) may be preferably from 10 nm to 200 nm, more preferably from 10 nm to 150 nm, and still more preferably from 10 nm to 100 nm. If the average particle diameter is 200 nm or less, color reproducibility may become excellent, and jetting property when droplets are jetted by an inkjet method may become excellent. If the average particle diameter is 10 nm or more, light-fastness may be improved. The particle size distribution of the pigment is not particularly restricted and may be either a broad particle size distribution or a monodispersed particle size distribution. In an embodiment, a mixture of two or more color materials having monodispersed particle size distributions may be used.

The average particle diameter and particle size distribution of the pigment refer to values obtained by measuring volume average particle diameters by a dynamic light scattering method, using a NANOTRAC particle size distribution measuring instrument (trade name: UPA-EX150, manufactured by NIKKISO CO., LTD.).

From the viewpoint of image density, the content of the pigment in the ink composition may be preferably from 1% by mass to 25% by mass, more preferably from 2% by mass to 20% by mass, and still more preferably from 2% by mass to 10% by mass based on the total amount of the ink composition.

The pigment may be used singly or in combination of two or more kinds thereof.

### (Resin particles)

The ink composition may preferably contain at least one kind of resin particles.

The resin particles are different from the polymer dispersant (the polymer dispersant covering at least a part of the pigment). The resin particles are present separately from the pigment.

The resin particles are aggregated with the organic acidic compound in the treatment liquid. Thus, the fixability of the image and the aggregation speed may be further improved.

If the ink composition containing the resin particles is used together with the treatment liquid containing the specific polymer compound, the aggregation speed may be suppressed to a certain extent and the spread of ink droplets may be facilitated. Accordingly, the graininess of image and a decrease in image uniformity due to insufficient spread of ink droplets may be further suppressed.

The resin particles may be preferably water-insoluble or substantially water-insoluble resin particles.

Here, the term "water-insoluble or substantially water-insoluble" water-insoluble resin as used above refers to a resin which has, when the resin is dried at 105°C for 2 hours and then dissolved in 100 g of water at 25°C, a dissolution amount of 15 g or less. From the viewpoint of improving the continuous jetting property and jetting stability of the ink, the dissolution amount may be preferably 10 g or less, more preferably 5 g or less, and even more preferably 1 g or less. The dissolution amount is an amount which can be found as being dissolved by completely (100%) neutralizing the resin with sodium hydroxide or acetic acid, depending on the type of the salt-forming groups of the water-insoluble resin.

Examples of the resin particles include particles of a thermoplastic, thermosetting, or modified, acrylic-based, epoxy-based, polyurethane-based, polyether-based, polyamide-based, unsaturated polyester-based, phenol-based, silicone-containing, or fluorine-containing resin; a polyvinyl resin such as vinyl chloride, vinyl acetate, polyvinyl alcohol, or polyvinyl butyral; a polyester resin such as an alkyd resin or a phthalic acid resin; an amino material such as a melamine resin, a melamine-formaldehyde resin, an aminoalkyd co-condensate resin, a urea resin, or a urea resin; or a copolymer or mixture thereof. Among these resins, an anionic acrylic resin may be obtained, for example, by polymerizing an acrylic monomer having an anionic group (anionic group-containing acrylic monomer) and, as needs arise, other monomer(s) that can be copolymerized with the anionic group-containing acrylic monomer in a solvent. Examples of the anionic group-containing acrylic monomer include acrylic monomers having one or more groups selected from the group consisting of a carboxyl group, a sulfonic acid group and a phosphonic acid group. Among them, acrylic monomers having a carboxyl group (for example, acrylic acid, methacrylic acid, crotonic acid, ethacrylic acid, propylacrylic acid, isopropylacrylic acid, itaconic acid, fumaric acid, or the like) may be preferable, and acrylic acid and methacrylic acid may be more preferable.

The resin particles may be preferably self-dispersible resin particles from the viewpoints or jetting stability and the liquid stability (particularly, dispersion stability) of the system containing the pigment. The self-dispersible resin refers to a water-insoluble polymer which can be in a dispersed state in an aqueous medium due to functional groups (particularly, acidic groups or salts thereof) of the polymer itself when dispersed by a phase inversion emulsification method in the absence of a surfactant.

The scope of the term "dispersed state" used herein includes both an emulsified state (i.e., emulsion) in which a water-insoluble polymer in the liquid state is dispersed in an aqueous medium and a dispersed state (i.e., suspension) in which a water-insoluble polymer in the solid state is dispersed in an aqueous medium.

The "aqueous medium" means a medium containing at least water. In embodiments, the aqueous medium may further contain a hydrophilic organic solvent if necessary. In embodiments, the aqueous medium may be preferably formed of water and 0.2% by mass or less of a hydrophilic organic solvent, and may be more preferably consisted of water.

In embodiments, from the viewpoint of the aggregation speed and ink fixability, the self-dispersible resin may be preferably self-dispersible resin particles which can be dispersed in an aqueous medium with the self-dispersible resin particles being in the solid state.

Examples of the method of preparing an emulsified state or a dispersed state of the self-dispersible resin, i.e., the method of preparing an aqueous dispersion of the self-dispersible resin, include a phase inversion emulsification method.

Examples of the phase inversion emulsification method include a method including: dissolving or dispersing a self-dispersible resin in a solvent (for example, a water-soluble organic solvent or the like); then directly pouring the obtained liquid into water without adding a surfactant; stirring and mixing the resulting liquid in a state in which the salt-forming groups (for example, acid groups) that the self-dispersible resin has are neutralized; and removing the solvent so as to obtain an aqueous dispersion in the emulsified or dispersed state.

The stably emulsified or dispersed state in the self-dispersible resin refers to a state which can be determined by the following procedure: a solution obtained by dissolving 30 g of a water-insoluble polymer in 70 g of an organic solvent (for example, methyl ethyl ketone), a neutralizing agent that can neutralize the salt-forming groups of the water-insoluble polymer to a degree of 100% (sodium hydroxide if the salt-forming groups are anionic, or acetic acid if the salt-forming groups are cationic), and 200 g of water are mixed and stirred (apparatus: a stirring apparatus having a stirring blade, rotation rate: 200 rpm, for 30 minutes, at 25°C), and then the organic solvent is removed from the mixed liquid. If a stably emulsified or dispersed state is maintained for at least one week at 25°C even after the removal of organic solvent from the mixed liquid and occurrence of precipitation is not found by visual observation for at least one week at 25°C after the removal of the organic solvent, the state of the water-insoluble resin in the mixed liquid is regarded to be a stably emulsified or dispersed state.

The stability of the emulsified or dispersed state of the self-dispersible resin can be also checked by a test of precipitation acceleration sing centrifugal separation. In the precipitation acceleration test using centrifugal separation, the stability can be evaluated by, for example, adjusting the aqueous dispersion of the resin particles obtained by the method described above to have a solids concentration of 25% by mass, performing centrifugal separation at 12,000 rpm for one hour, and measuring a solid concentration of the supernatant resulted by the centrifugal separation.

The larger the ratio of the solid concentration of the supernatant after centrifugal separation to the solid concentration of the aqueous dispersion before centrifugal separation is (a value close to 1), the smaller degree precipitation of the resin particles due to centrifugal separation occurs; in other words, the more stable the aqueous dispersion of the resin particles is. In embodiments, the ratio of the solids concentration after centrifugal separation to the solids concentration before centrifugal separation is preferably 0.8 or higher, more preferably 0.9 or higher, and particularly preferably 0.95 or higher.

In the self-dispersible resin, the content of the water-soluble components that exhibits water solubility when the self-dispersible resin is made into a dispersed state is preferably 10% by mass or lower, more preferably 8% by mass or lower, and even more preferably 6% by mass or lower. When the content of the water-soluble components is 10% by mass or lower, swelling of the resin particles or fusion between the resin particles may be effectively suppressed, and a relatively more stable dispersed state can be maintained. In addition, an increase in the viscosity of the ink composition can be suppressed thereby when the ink composition is an aqueous ink composition, so that jetting stability may be further improved in the case of employing the ink composition in an inkjet method.

The term "water-soluble component" as used herein refers to a compound which is included in the self-dispersible resin, and which dissolves in water in a case in which the self-dispersible resin is made into a dispersed state. The water-soluble component is a water-soluble compound which is generated as a by-product or is incorporated during the production of the self-dispersible resin.

The main chain skeleton of the water-insoluble resin is not particularly limited, and examples thereof include a vinyl polymer and a condensation polymer (an epoxy resin, polyester, polyurethane, polyamide, cellulose, polyether, polyurea, polyimide, polycarbonate, or the like). Among them, a vinyl polymer is particularly preferable.

Preferable examples of the vinyl polymer and monomers for forming the vinyl polymer include those described in JP-A Nos. 2001-181549 and 2002-88294. Preferable examples of the vinyl polymer further include a vinyl polymer having a dissociative group at a terminal of the polymer chain that has been introduced by radical polymerization of a vinyl monomer using a chain transfer agent, a polymerization initiator, or an iniferter, each of which has a dissociative group (or a substituent that can be derivatized into a dissociative group), or by ion polymerization using a compound having a dissociative group (or a substituent that can be derivatized into a dissociative group) as either an initiator or a terminator.

Preferable examples of the condensation polymer and monomers for forming the condensation polymer may include those described in JP-A No. 2001-247787.

From the viewpoint of self-dispersibility, the particles of the self-dispersible resin preferably include a water-insoluble polymer that contains a hydrophilic constituent unit and a constituent unit derived from an aromatic group-containing monomer or a cyclic aliphatic group-containing monomer.

The "hydrophilic constituent unit" is not particularly limited as long as the hydrophilic constituent unit is derived from a hydrophilic group-containing monomer, and may be a constituent unit derived from one type of hydrophilic group-containing monomer or a constituent unit derived from two or more types of hydrophilic group-containing monomers. The hydrophilic group is not particularly limited, and may be a dissociative group or a nonionic hydrophilic group.

The hydrophilic group is preferably a dissociative group, and more preferably an anionic dissociative group, from the viewpoint of promoting self-dispersion and from the viewpoint of the stability of the formed emulsified or dispersed state. Examples of the dissociative group include a carboxyl group, a phosphoric acid group, and a sulfonic acid group. Among them, a carboxyl group is preferable from the viewpoint of fixability of the ink composition obtained.

The hydrophilic group-containing monomer is preferably a dissociative group-containing monomer, and more preferably a dissociative group-containing monomer having a dissociative group and an ethylenically unsaturated bond, from the viewpoints of self-dispersibility and aggregation properties. Examples of the dissociative group-containing monomer include an unsaturated carboxylic acid monomer, an unsaturated sulfonic acid monomer, and an unsaturated phosphoric acid monomer.

Specific examples of the unsaturated carboxylic acid monomer include acrylic acid, methacrylic acid, crotonic acid, itaconic acid, maleic acid, fumaric acid, citraconic acid, and 2-methacryloyloxyethyl succinic acid.

Specific examples of the unsaturated sulfonic acid monomer include styrenesulfonic acid, 2-acrylamido-2-methylpropanesulfonic acid, 3-sulfopropyl (meth)acrylate, and a bis(3-sulfopropyl) itaconate ester.

Specific examples of the unsaturated phosphoric acid monomer include vinylphosphonic acid, vinyl phosphate, bis(methacryloyloxy ethyl) phosphate, diphenyl-2-acryloyloxy ethyl phosphate, diphenyl-2-methacryloyloxy ethyl phosphate, and dibutyl-2-acryloyloxy ethyl phosphate.

Among the dissociative group-containing monomers, unsaturated carboxylic acid monomers may be preferable, acrylic monomers may be more preferable, and acrylic acid and methacrylic acid may be particularly preferable, from the viewpoints of dispersion stability and jetting stability.

The particles of the self-dispersible resin preferably include a polymer having a carboxyl group, and more preferably include a polymer which has a carboxyl group and has an acid value of from 25 mgKOH/g to 100 mgKOH/g, from the viewpoints of self-dispersibility and the aggregation speed when contacting with the treatment liquid during image formation using a treatment liquid. Further, from the viewpoint of self-dispersibility, the acid value may be more preferably from 25 mgKOH/g to 80 mgKOH/g, and particularly preferably from 30 mgKOH/g to 65 mgKOH/g.

When the acid value is 25 mgKOH/g or higher, the stability of self-dispersion properties may be improved. When the acid value is 100 mgKOH/g or lower, aggregation properties may be improved.

The aromatic group-containing monomer is not particularly limited as long as the monomer is a compound containing an aromatic group and a polymerizable group. The aromatic group may be a group derived from an aromatic hydrocarbon or a group derived from an aromatic heterocycle. In embodiments, the aromatic group is preferably an aromatic group derived from an aromatic hydrocarbon from the viewpoint of particle shape stability in an aqueous medium.

Further, the polymerizable group may be a condensation-polymerizable group or an addition-polymerizable group. In embodiments, the polymerizable group is preferably an addition-polymerizable group, and more preferably a group containing an ethylenically unsaturated bond, from the viewpoint of particle shape stability in an aqueous medium.

The aromatic group-containing monomer may be preferably a monomer having an aromatic group derived from aromatic hydrocarbon and an ethylenically unsaturated bond. One type of the aromatic group-containing monomers may be used alone, or two or more types of them may be used in combination.

Examples of the aromatic group-containing monomer include phenoxyethyl (meth)acrylate, benzyl (meth)acrylate, phenyl (meth)acrylate, and styrenic monomers. Above all, aromatic group-containing (meth)acrylate monomers may be preferable, at least one selected from the group consisting of phenoxyethyl (meth)acrylate, benzyl (meth)acrylate, and phenyl (meth)acrylate may be more preferable, and phenoxyethyl (meth)acrylate, and benzyl (meth)acrylate may be even more preferable.

The term "(meth)acrylate" as used herein means acrylate or methacrylate.

The cyclic aliphatic group-containing monomer may be preferably a monomer having a cyclic aliphatic group derived from a cyclic aliphatic hydrocarbon and an ethylenically unsaturated bond, and more preferably a cyclic aliphatic group-containing (meth)acrylate monomer (hereinbelow, may be referred to as an "alicyclic (meth)acrylate").

The alicyclic (meth)acrylate refers to a compound which contains a structural moiety derived from (meth)acrylic acid and a structural moiety derived from an alcohol, in which the structural moiety derived from an alcohol has a structure containing at least one substituted or unsubstituted alicyclic hydrocarbon group (cyclic aliphatic group). Note that, the alicyclic hydrocarbon group may be a structural moiety derived from an alcohol itself, or may bond to a structural moiety derived from an alcohol through a linking group.

The alicyclic hydrocarbon group is not particularly limited as long as the group contains a cyclic non-aromatic hydrocarbon group, and examples thereof include a monocyclic hydrocarbon group, a bicyclic hydrocarbon group, and a polycyclic hydrocarbon group that is tri- or higher-cyclic. Examples of the alicyclic hydrocarbon group may include: a cycloalkyl group such as a cyclopentyl group or a cyclohexyl group; a cycloalkenyl group; a bicyclohexyl group; a norbornyl group; an isobornyl group; a dicyclopentanyl group; a dicyclopentenyl group; an adamantyl group; a decahydronaphthalenyl group; a perhydrofluorenyl group; a tricyclo [5.2.1.0^{2,6}]decanyl group; and bicyclo[4.3.0] nonane.

The alicyclic hydrocarbon group may further have a substituent. Examples of the substituent include an alkyl group, an alkenyl group, an aryl group, an aralkyl group, an alkoxy group, a hydroxyl group, a primary amino group, a secondary amino group, a tertiary amino group, an alkylcarbonyl group, an arylcarbonyl group, and a cyano group. Further, the alicyclic hydrocarbon group may form a condensed ring. The alicyclic hydrocarbon group may preferably have an alicyclic hydrocarbon group portion having from 5 to 20 carbon atoms, from the viewpoints of viscosity and solubility.

Specific examples of alicyclic (meth)acrylates include the compounds described below, but the invention is not limited to these specific examples.

Specific examples of alicyclic (meth)acrylates that are monocyclic include cycloalkyl (meth)acrylates containing a cycloalkyl group having from 3 to 10 carbon atoms, such as cyclopropyl (meth)acrylate, cyclobutyl (meth)acrylate, cyclopentyl (meth)acrylate, cyclohexyl (meth)acrylate, cycloheptyl (meth)acrylate, cyclooctyl (meth)acrylate, cyclononyl (meth)acrylate, and cyclodecyl (meth)acrylate.

Specific examples of alicyclic (meth)acrylates that are bicyclic include isobornyl (meth)acrylate and norbornyl (meth)acrylate.

Specific examples of alicyclic (meth)acrylates that are tricyclic include adamantyl (meth)acrylate, dicyclopentanyl (meth)acrylate, and dicyclopentenyloxy ethyl (meth)acrylate.

These alicyclic (meth)acrylates may be used alone or in a combination of two or more of them.

From among the above, the alicyclic (meth)acrylate may preferably include at least one selected from a bicyclic (meth)acrylate or a polycyclic (meth)acrylate that is tri- or higher-cyclic, and more preferably include at least one selected from the group consisting of isobornyl (meth)acrylate, adamantyl (meth)acrylate, and dicyclopentanyl (meth)acrylate, from the viewpoints of the dispersion stability of the self-dispersible resin particles, fixability, and blocking resistance.

The self-dispersible resin may be preferably an acrylic resin including a constituent unit derived from a (meth)acrylate monomer, and more preferably an acrylic resin including a constituent unit derived from an aromatic group-containing (meth)acrylate monomer or an alicyclic (meth)acrylate. Even more preferably, the self-dispersible resin may include a constituent unit(s) derived from an aromatic group-containing (meth)acrylate monomer or an alicyclic (meth)acrylate, at a content of from 10% by mass to 95% by mass. When the content of the constituent unit(s) derived from aromatic group-containing (meth)acrylate monomer or alicyclic (meth)acrylate is from 10% by mass to 95% by mass, the stability of the self-emulsified or self-dispersed state may be improved, and an increase in the ink viscosity can be suppressed.

From the viewpoints of the stability of the self-dispersed state, stabilization of the particle shape in an aqueous medium due to hydrophobic interaction between aromatic rings or alicyclic rings, and reduction in the amount of water-soluble components through hydrophobization of the particles to an appropriate degree, the content of the constituent unit(s) derived from an aromatic group-containing (meth)acrylate monomer or an alicyclic (meth)acrylate is more preferably from 15% by mass to 90% by mass, even more preferably from 15% by mass to 80% by mass, and particularly preferably from 25% by mass to 70% by mass.

The self-dispersible resin may include, for example, a constituent unit derived from an aromatic group-containing monomer or a cyclic aliphatic group-containing monomer and a constituent unit derived from a dissociative group-containing monomer. The self-dispersible resin may further include one or more other constituent units (additional constituent units), as necessary.

The monomer that is used to form the additional constituent unit is not particularly limited as long as the monomer is copolymerizable with the aromatic group-containing monomer or the cyclic aliphatic group-containing monomer and the dissociative group-containing monomer. From the viewpoints of the flexibility of the polymer skeleton and the ease of the control of the glass transition temperature (Tg) of the polymer, the monomer may be preferably an alkyl group-containing monomer.

Examples of the alkyl group-containing monomer include: alkyl (meth)acrylate such as methyl (meth)acrylate, ethyl (meth)acrylate, isopropyl (meth)acrylate, n-propyl (meth)acrylate, n-butyl (meth)acrylate, isobutyl (meth)acrylate, t-butyl (meth)acrylate, hexyl (meth)acrylate, or ethylhexyl (meth)acrylate); ethylenically unsaturated monomers containing a hydroxyl group such as hydroxymethyl(meth)acrylate, 2-hydroxyethyl(meth)acrylate, 2-hydroxypropyl(meth)acrylate, 4-hydroxybutyl(meth)acrylate, hydroxypentyl(meth)acrylate, and hydroxyhexyl(meth)acrylate; dialkylaminoalkyl(meth)acrylate such as dimethylaminoethyl(meth)acrylate; N-hydroxyalkyl(meth)acrylamide such as N-hydroxymethyl(meth)acrylamide, N-hydroxyethyl(meth)acrylamide, and N-hydroxybutyl(meth)acrylamide; and (meth)acrylamides, such as N-alkoxyalkyl(meth)acrylamide such as N-methoxymethyl(meth)acrylamide, N-ethoxymethyl(meth)acrylamide, N-(n-, iso-) butoxymethyl(meth)acrylamide, N-methoxyethyl(meth)acrylamide, N-ethoxyethyl(meth)acrylamide, and N-(n-, iso-)butoxyethyl(meth)acrylamide.

The molecular weight of the water-insoluble polymer that forms the self-dispersible resin particles, in terms of weight average molecular weight, may be preferably from 3,000 to 200,000, and more preferably from 5,000 to 150,000, and even more preferably from 10,000 to 100,000. When the weight average molecular weight is 3,000 or more, the amount of water-soluble components can be effectively reduced. When the weight average molecular weight is 200,000 or less, the self-dispersion stability can be enhanced.

The weight average molecular weight can be measured by gel permeation chromatography (GPC). HLC-8020GPC (trade name, manufactured by Tosoh Corporation) is used as GPC apparatus, three columns of TSKGEL, SUPER MULTIPORE HZ-H (trade name, manufactured by Tosoh Corporation, 4.6 mmID × 15 cm), and THF (tetrahydrofuran) as an eluate. The measurement is performed using an IR detector under the conditions of a sample concentration of 0.45 weight%, a flow rate of 0.35 ml/min., an injection amount of a sample of 10 µl, and a measurement temperature of 40°C. Calibration curves are prepared by eight samples of REFERENCE SAMPLE TSK STANDARD, POLYSTYRENE (trade name, manufactured by Tosoh Corporation): "F-40", "F-20", "F-4", "F-1", "A-5000", "A-2500", "A-1000" and "n-propylbenzene".

The water-insoluble polymer that forms the self-dispersible resin particles may preferably include a structural unit(s) derived from an aromatic group-containing (meth)acrylate monomer (preferably, a structural unit derived from phenoxyethyl (meth)acrylate and/or a structural unit derived from benzyl (meth)acrylate) or a structural unit derived from a cyclic aliphatic group-containing monomer (preferably, a structural unit derived from an alicyclic (meth)acrylate), at a copolymerization ratio of from 15% by mass to 80% by mass relative to the total mass of the self-dispersible resin particles, from the viewpoint of the regulation of hydrophilicity and hydrophobicity of the polymer.

From the viewpoint of the regulation of hydrophilicity and hydrophobicity of the polymer, it may be preferable that the water-insoluble polymer includes a constituent unit(s) derived from an aromatic group-containing (meth)acrylate monomer or an alicyclic (meth)acrylate, at a copolymerization ratio of from 15% by mass to 80% by mass, a constituent unit derived from a carboxyl group-containing monomer, and a constituent unit derived from an alkyl group-containing monomer (preferably, a structural unit derived from an alkyl ester of (meth)acrylic acid). It may be more preferable that the water-insoluble polymer includes a structural unit(s) derived from phenoxyethyl (meth)acrylate and/or a structural unit derived from benzyl (meth)acrylate, at a copolymerization ratio of from 15% by mass to 80% by mass, a constituent unit derived from a carboxyl group-containing monomer, and a constituent unit derived from an alkyl group-containing monomer (preferably, a structural unit derived from an alkyl ester of (meth)acrylic acid in which the alkyl moiety of the alkyl ester has from 1 to 4 carbon atoms).

The water-insoluble polymer may preferably have an acid value of from 25 to 100 as well as having a weight average molecular weight of from 3,000 to 200,000, and more preferably have an acid value of from 25 to 95 as well as having a weight average molecular weight of from 5,000 to 150,000.

Specific examples of the water-insoluble resin that forms the self-dispersible resin particles include the following resins. However, the invention is not limited to these specific examples. The ratios in the parentheses represent mass ratios of copolymerization components.

B-01: Phenoxyethyl acrylate/Methyl methacrylate/Acrylic acid copolymer (50/45/5)
B-02: Phenoxyethyl acrylate/Benzyl methacrylate/Isobutyl methacrylate/Methacrylic acid copolymer (30/35/29/6)
B-03: Phenoxyethyl methacrylate/Isobutyl methacrylate/Methacrylic acid copolymer (50/44/6)
B-04: Phenoxyethyl acrylate/Methyl methacrylate/Ethylacrylate/Acrylic acid Copolymer (30/55/10/5)
B-05: Benzyl methacrylate/Isobutyl methacrylate/Methacrylic acid copolymer (35/59/6)
B-06: Styrene/Phenoxyethyl acrylate/Methyl methacrylate/Acrylic acid copolymer (10/50/35/5)
B-07: Benzyl acrylate/Methyl methacrylate/Acrylic acid copolymer (55/40/5)
B-08: Phenoxyethyl methacrylate/Benzyl acrylate/Methacrylic acid copolymer (45/47/8)
B-09: Styrene/Phenoxyethyl acrylate/Butyl methacrylate/Acrylic acid copolymer (5/48/40/7)
B-10: Benzyl methacrylate/Isobutyl methacrylate/Cyclohexyl methacrylate/Methacrylic acid copolymer (35/30/30/5)
B-11: Phenoxyethyl acrylate/Methyl methacrylate/Butyl acrylate/Methacrylic acid copolymer (12/50/30/8)
B-12: Benzyl acrylate/Isobutyl methacrylate/Acrylic acid copolymer (93/2/5)
B-13: Styrene/Phenoxyethyl methacrylate/Butyl acrylate/Acrylic acid copolymer (50/5/20/25)
B-14: Styrene/Butyl acrylate/Acrylic acid copolymer (62/35/3)
B-15: Methyl methacrylate/Phenoxyethyl acrylate/Acrylic acid copolymer (45/51/4)
B-16: Methyl methacrylate/Phenoxyethyl acrylate/Acrylic acid copolymer (45/49/6)
B-17: Methylmethacrylate/Phenoxyethyl acrylate/Acrylic acid copolymer (45/48/7)
B-18: Methyl methacrylate/Phenoxyethyl acrylate/ Acrylic acid copolymer (45/47/8)
B-19: Methyl methacrylate/Phenoxyethyl acrylate/Acrylic acid Copolymer (45/45/10)
B-20: Methyl methacrylate/Isobornyl methacrylate/Methacrylic acid Copolymer (20/72/8)
B-21: Methyl methacrylate/Isobornyl methacrylate/Methacrylic acid Copolymer (40/52/8)
B-22: Methyl methacrylate/Isobornyl methacrylate/Dicyclopentanyl methacrylate/Methacrylic acid Copolymer (20/62/10/8)
B-23: Methyl methacrylate/Dicyclopentanyl methacrylate/Methacrylic acid Copolymer (20/72/8)

There is no particular limitation on a method of producing the water-insoluble polymer which configures the self-dispersible resin particles. Examples include: a method including performing emulsion polymerization in the presence of a polymerizable surfactant to covalently bind the surfactant and a water-insoluble polymer; and a method including copolymerizing a monomer mixture containing the hydrophilic group-containing monomer and the aromatic group-containing monomer or the cyclic aliphatic group-containing monomer by known polymerization methods such as a solution-polymerization method or a bulk polymerization method. Among the polymerization methods, the solution-polymerization method may be preferable, and the solution-polymerization method using an organic solvent may be more preferable, from the viewpoint of an aggregation speed and droplet jetting stability.

From the viewpoint of an aggregation speed, it may be preferable that the self-dispersible resin particles contain a polymer, the polymer being synthesized in an organic solvent and having a carboxyl group (, preferably the acid value thereof being 20 to 100,), and the self-dispersible resin particles being prepared as a polymer dispersion in which the carboxyl group of the polymer is partially or thoroughly neutralized and water serves as a continuous phase. More specifically, the production of the self-dispersible resin particles may preferably include synthesizing a polymer in an organic solvent and dispersing the polymer to form an aqueous dispersion in which at least a part of the carboxyl group of the polymer is neutralized.

The dispersing may preferably include the following processes (1) and (2).
Process (1): Stirring a mixture containing a polymer (water-insoluble polymer), an organic solvent, a neutralizer, and an aqueous medium.
Process (2): Removing the organic solvent from the mixture.

The process (1) may preferably include obtaining a dispersion by dissolving the polymer (water-insoluble polymer) in an organic solvent first, and mixing and stirring the mixture with gradually adding a neutralizer and an aqueous medium thereto. The addition of the neutralizer and the aqueous medium in a solution of the water-insoluble polymer in which the polymer has been dissolved into an organic solvent may enable to provide self-dispersible resin particles having particle diameters which may enable to achieve higher storage stability without strong shearing force.

There is no particular limitation on a stirring method of the mixture, and generally-used mixing and stirring devices or, as required, dispersers such as an ultrasonic disperser or a high-pressure homogenizer can be used.

In the process (2), an aqueous dispersion of the self-dispersible resin particles can be obtained by inverting a phase of the dispersion, which has been obtained in the process (1), to a water phase by common procedures such as vacuum distillation distilling off the organic solvent from. The thus-obtained aqueous dispersion is substantially free of the organic solvent. The amount of the organic solvent contained in the aqueous dispersion may be preferably 0.2 % by mass or lower, and more preferably 0.1 % by mass or lower.

Preferable examples of the organic solvent include an alcohol solvent, a ketone solvent, and an ether solvent. Examples of the alcohol solvent include those described in paragraph 0059 of JP-A No. 2010-188661.

Examples of the neutralizer include those described in paragraphs 0060 to 0061 of JP-ANo. 2010-188661.

The average particle diameter of the resin particles (particularly the self-dispersible resin particles) may be, in terms of a volume average particle diameter, preferably in the range of 10 nm to 400 nm, more preferably in the range of 10 nm to 200 nm, still more preferably in the range of 10 nm to 100 nm, and particularly preferably in the range of 10 nm to 50 nm. When the average particle diameter is 10 nm or more, suitability of the resin particles to production process may be increased. When the average particle diameter is 400 nm or lower, the storage stability may be increased. The particle size distribution of the polymer particles is not particularly limited. The resin particles may have either a broad particle size distribution or a monodisperse particle size distribution. Two or more kinds of resin particles may be used in combination as a mixture.

The average particle diameter and particle size distribution of the resin particles can be determined by measuring the volume average particle diameter by dynamic light scattering using a nanotruck particle size distribution meter UPA-EX150 (trade name, manufactured by Nikkiso Co., Ltd.).

When the ink composition contains the resin particles (particularly the self-dispersible resin particles), the resin particles (particularly the self-dispersible resin particles) can be used singly or in combination of two or more thereof.

When the ink composition contains the resin particles (particularly the self-dispersible resin particles), from the viewpoint of glossiness of an image formed from the ink composition or the like, the content of the resin particles (particularly the self-dispersible resin particles) in the ink composition may be preferably from 1 % by mass to 30 % by mass, and more preferably from 3 % by mass to 15 % by mass, relative to the total amount of the ink composition.

### (Water)

The ink composition may preferably contain water. The content of water in the ink composition is not particularly limited. In embodiments, it may be preferably from 10 % by mass to 99 % by mass, more preferably from 30 % by mass to 80 % by mass, and further preferably from 50 % by mass to 70% by mass, based on the total amount of the ink composition.

### (Organic solvent)

The ink composition may further contain an organic solvent, which may be preferably a water-soluble organic solvent. By including a water-soluble organic solvent (, which may be preferably a water-soluble organic solvent), drying of the ink composition may be suppressed and permeation of the ink composition in a recording medium may be promoted.

When the water-soluble organic solvent is used as an anti-drying agent in the ink composition employed in an inkjet image recording method, clogging of ink jetting ports, which is a phenomenon that occurs due do drying of an ink composition, may be effectively suppressed.

The water-soluble organic solvent may be preferably one having a vapor pressure which is lower than that of water. Specific examples of such water-soluble organic solvent include polyhydric alcohols such as ethylene glycol, propylene glycol, diethylene glycol, polyethylene glycol, thiodiglycol, dithiodiglycol, 2-methyl-1,3-propanediol, 1,2,6-hexanetriol, acetylene glycol derivatives, glycerin, and trimethylolpropane; lower alkyl ethers of polyhydric alcohols such as ethylene glycol monomethyl(or ethyl)ether, diethylene glycol monomethyl (or ethyl)ether, triethylene glycol monoethyl(or butyl)ether, and tripropyrene glycol monomethyl (or ethyl) ether; heterocycles such as 2-pyrrolidone, N-methyl-2-pyrrolidone, 1,3-dimethyl-2-imidazolidinone and N-ethyl morpholine; sulfur-containing compounds such as sulfolane, dimethyl sulfoxide and 3-sulfolene; polyfunctional compounds such as diacetone alcohol and diethanolamine; and urea derivatives.

In particular, a polyhydric alcohol such as glycerin or diethylene glycol may be preferable as the anti-drying agent. These water-soluble organic solvents may be used singly or two or more kinds thereof may be used in combination. The content of the water-soluble organic solvent may be preferably from 10 % by mass to 50 % by mass based on the total amount of the ink composition.

The water-soluble organic solvent may be used in view of promoting penetration of the ink composition into a recording medium. Specific examples of the water-soluble organic solvent which may be effective for promoting penetration include alcohols such as ethanol, isopropanol, butanol, di- (or tri-) ethylene glycol monobutyl ether and 1,2-hexanediol, sodium lauryl sulfate, sodium oleate, and nonionic surfactants. Preferable effects may be obtained when the water-soluble organic solvent is contained in the ink composition in an amount of from 5 % by mass to 30 % by mass based on the total amount of the ink composition. The water-soluble organic solvent may be preferably used in an amount to such an extent that the ink composition does not cause bleeding or print-through of a printed image.

In addition to the above purposes, the water-soluble organic solvent may be used for adjusting the viscosity. Specific examples of the water-soluble organic solvent which may be used for adjusting the viscosity include alcohols (for example, methanol, ethanol, propanol, isopropanol, butanol, isobutanol, sec-butanol, t-butanol, pentanol, hexanol, cyclohexanol, and benzyl alcohol); polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, and thiodiglycol); glycol derivatives (for example, ethyleneglycol monomethylether, ethyleneglycol monoethylether, ethyleneglycol monobutylether, diethyleneglycol monomethylether, diethyleneglycol monobutylether, propyleneglycol monomethylether, propyleneglycol monobutylether, dipropyleneglycol monomethylether, tripropyleneglycol monomethylether, tripropyleneglycol monoethylether, triethyleneglycol monomethylether, ethyleneglycol diacetate, ethyleneglycol monomethylether acetate, triethyleneglycol monomethylether, triethyleneglycol monoethylether and ethyleneglycol monophenylether); amines (for example, ethanolamine, diethanolamine, triethanolamine, N-methyl diethanolamine, N-ethyl diethanolamine, morpholine, N-ethyl morpholine, ethylenediamine, diethylene triamine, triethylenetetramine, polyethyleneimine, and tetramethyl propylenediamine); and other polar solvents (for example, formamide, N,N-dimethyl formamide, N,N-dimethyl acetamide, dimethyl sulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile and acetone).

The water-soluble organic solvent may be used alone, or two or more kinds the water-soluble organic solvents may be used in combination.

### (Surfactant)

The ink composition may preferably contain at least one surfactant.

Examples of the surfactant include a nonionic surfactant, a cationic surfactant, an anionic surfactant, and a betaine surfactant. From the viewpoint of an aggregation speed, an anionic surfactant or a nonionic surfactant may be preferable.

The ink composition may preferably contain a surfactant such that the surface tension of the ink composition is adjusted in the range from 25 mN/m to 40 mN/m, with which the ink composition may be favorably jetted by an inkjet recoding method. In particular, the content of the surfactant may be preferably such that the surface tension is adjusted in the range from 27 mN/m to 37 mN/m.

These surfactants may be used as defoaming agents. Examples of the surfactant further include fluorocarbon (fluorinated alkyl) surfactants, silicone compounds, and chelating agents such as ethylenediaminetetraacetic acid (EDTA).

### (Polymerizable compound and Polymerization initiator)

The ink composition may further contain a polymerizable compound in addition to the above-described components. The polymerizable compound is a compound having a polymerizable group. The polymerizable group may be either a polycondensation polymerizable group or an addition polymerization polymerizable group. The polymerizable group may be preferably an addition polymerization polymerizable group, and more preferably a group containing an ethylenically unsaturated bond, from the viewpoint of particle shape stability in the aqueous medium.

The ink composition may contain a polymerization initiator in addition to the polymerizable compound. Examples of the polymerization initiator include a thermal polymerization initiator and a photopolymerization initiator.

### (Other additives)

The ink composition may further contain other additives in addition to the components described above. Examples of the other additives include known additives such as a discoloration preventing agent, an emulsion stabilizer, a penetration promoting agent, an ultraviolet absorbing agent, an antiseptic agent, an antifungal agent, a pH adjusting agent, a defoaming agent, a viscosity adjusting agent, a dispersion stabilizer, an antirust agent, and a chelating agent. These additives may be directly added to the ink composition after preparation thereof, or may be added during preparation of the ink composition.

A neutralizer (an organic base, inorganic alkali) may be used as the pH adjusting agent. From the viewpoint of improving the preservation stability of the ink composition, the pH adjusting agent may be added in such a manner that the pH of the ink composition becomes from 6 to 10, which may be more preferably from 7 to 10.

From the viewpoints of jetting stability in the case of jetting the ink composition by an ink-jet method and the aggregation speed when the treatment liquid described below is used, the viscosity of the ink composition may be preferably from 1 mPa·s to 30 mPa·s, more preferably from 1 mPa·s to 20 mPa·s, still more preferably from 2 mPa·s to 15 mPa·s, and much more preferably from 2 mPa·s to 10 mPa·s.

The viscosity of the ink composition is measured using VISCOMETER TV-22 (trade name, manufactured by TOKI SANGYO CO. LTD) under the condition of 25°C.

In embodiments, the ink composition may preferably contain a pigment coated with a polymer dispersant having a carboxyl group and resin particles, have the solid content of from 7 % by mass to 10% by mass, and have a ratio of the solid content other than the pigment to the content of the pigment of from 0.8 to 1.6. In embodiments, the ink composition may more preferably contain a pigment coated with an acrylic polymer and self-dispersible resin particles, have the solid content of from 7 % by mass to 9% by mass, and have aratio of the solid content other than the pigment to the content of the pigment of from 1.0 to 1.4.

A specific configuration of the ink set, that is one aspect of the invention, is not particularly restricted as long as the ink set includes a combination of at least one ink composition described above and the treatment liquid described above.

Preferable examples of the configuration of the ink set include: a three-color configuration having a combination of a cyan ink (the ink composition), a magenta ink (the ink composition), a yellow ink (the ink composition), and the treatment liquid; and a four-color configuration having a combination of a black ink (the ink composition), a cyan ink (the ink composition), a cyan ink (the ink composition), a magenta ink (the ink composition), a yellow ink (the ink composition), and the treatment liquid.

In embodiments, the ink set may be an ink set of one-color configuration having one kind of the ink composition and the treatment liquid, or may be an ink set of two-color configuration having two kinds of ink composition and the treatment liquid, if necessary.

The ink set may have, in addition to the ink composition, other ink compositions such as one or more selected from a light cyan ink, a light magenta ink, and a light yellow ink, if necessary. As the other ink compositions, any known ink composition may be used without any particular restriction.

In embodiments, the ink set may include two or more kinds of treatment liquids, if necessary. In a case in which the ink set includes two or more kinds of ink composition, at least one kind of the ink composition is an ink composition containing a pigment. When the ink set contains two or more kinds of the treatment liquid, at least one kind of the treatment liquid may be a treatment liquid containing the organic acidic compound and the specific polymer compound.

The ink set may be used suitably in the following image forming method.

### <Image forming method>

The image forming method, that is one aspect of the invention, includes a use of the ink set described above, and includes at least: applying the treatment liquid to a recording medium; and applying the ink composition to the recording medium to which the treatment liquid has been applied,

The image forming method of this configuration may suppress the graininess of the image and the reduction in the image uniformity.

### (Application of Treatment liquid)

The application of the treatment liquid to the recording medium can be performed by employing a known method such as a coating method, an inkjet method, or a dipping method. The coating method may be a known coating method using a bar coater, an extrusion die coater, an air doctor coater, a blade coater, a rod coater, a knife coater, a squeeze coater, a reverse roll coater, or the like. Details of the inkjet method are described below.

The treatment liquid application process is conducted before the ink application process. Namely, the treatment liquid for aggregating components in the ink is applied onto the recording medium in advance of the application of the ink, and then the ink is applied so as to be in contact with the treatment liquid that has been applied onto the recording medium, to form an image.

Thereby, inkjet recording may be speeded up, and even when high speed image formation is performed, an image having high density and high resolution may be obtained.

In embodiments, it may be preferable that heating and drying of the treatment liquid on the recording medium is performed during a period from after the application of the treatment liquid onto the recording medium to the application of the ink composition. Inclusion of this heating-drying process may improve ink coloring properties such as suppression of bleeding, and may enable recording of a visible image having good color density and good hue.

The heating-drying may be conducted by using a known heating means such as a heater, a blowing means utilizing air blow such as a dryer, or a combination thereof.

Examples of a method of heating include a method of applying heat by using a heater or the like from a side of the recording medium opposite from the face applied with the treatment liquid, a method of blowing warm air or hot air to the face of the recording medium applied with the treatment liquid, and a method of heating by using an infrared heater. In embodiments, two or more of these methods may be combined and used for the heating.

### (Application of Ink composition)

In the ink application process, the above-described ink composition is jetted onto (the treatment liquid on) a recording medium, on which the treatment liquid has been provided, by an inkjet method.

A desired visible image can be formed by application of the ink composition of the recording medium as a result of this process. Details of the ink composition used in this process are as described above.

The inkjet method is not particularly limited, and may be any known method such as a charge-control method in which ink is ejected by electrostatic attraction force; a drop-on-demand method (pressure-pulse method) in which a pressure of oscillation of a piezo element is utilized; an acoustic inkjet method in which ink is ejected by radiation pressure generated by irradiation of ink with acoustic beams that have been converted from electric signals; and a thermal inkjet method in which ink is ejected by a pressure generated by formation of bubbles caused by heating of ink (BUBBLE-JET®). In embodiments, a inkjet method in which an ink is jetted from nozzles by operating force caused by a rapid change in a volume of the ink caused by application of thermal energy to the ink as described in JP-A No. 54-59936 may be effectively used.

Examples of the inkjet method further include: a method in which a large number of small-volume droplets of ink having a low color density, which is called a photo ink, are jetted; a method in which inks having substantially the same hue but different densities are used to improve image quality; and a method in which a clear and colorless ink.

The inkjet head used in an inkjet method may be either an on-demand type head or a continuous type head. Examples of an ejection system include electromechanical transduction systems (such as a single-cavity system, a double-cavity system, a vendor system, a piston system, a share-mode system and a shared-wall system), electrothermal transduction systems (such as a thermal inkjet system and a BUBBLE-JET® system), electrostatic suction systems (such as an electric-field-control system and a slit-jet system), and discharge systems (such as a spark-jet system), and any of these ejection systems is applicable.

The ink nozzles or other means used for inkjet recording are not particularly limited, and may be selected as appropriate according to purposes.

The inkjet head used in the inkjet recording method may be that of a shuttle system in which recording is performed while a short serial head having a small length is moved in a width direction of a recording medium in a scanning manner, and that of a line system in which a line head having recording devices that are aligned to correspond to the entire length of a side of a recording medium is used. In the line system, image recording can be performed over the entire area of a surface of a recording medium by moving the recording medium in a direction orthogonal to the direction along which the recording devices are aligned, and a conveyance system, such as carriage, which moves the short head to scan is unnecessary. Since the complicated of the movement of the carriage and the recording medium need not to be controlled while moving only the recording medium, the recording speed achieved by the line system is higher than that of the shuttle system. Either system can be applied to the image forming method of one aspect of the invention. The effect of improving blocking resistance or rubbing resistance may be generally more significant in a line system, in which dummy jetting is not performed.

The application of the ink may be preferably started within 10 seconds, and more preferably started in the range from 0.1 seconds to 10 seconds after the application of the treatment liquid. This allows high-speed image formation.

In the image forming method, the use of the ink set makes it possible to suppress impact interference between ink droplets and to form a high definition image even in high-speed image recording.

The wording "started within 10 seconds after the application of the treatment liquid" used herein means that the time from the end of both the application and drying of the treatment liquid to deposition of a first ink droplet on the recording medium is within 10 seconds.

In the application of the ink, the amount of the liquid of the droplet of the ink to be applied (jetted) may be preferably from 1.5 pL to 3.0 pL, and more preferably from 1.5 pL to 2.5 pL, from the viewpoint of formation of a high definition image.

The amount of the liquid of the droplet of the ink may be adjusted by suitably selecting the ejection conditions in the ink-jet method according to the ink composition to be jetted.

### Thermal Fixing Process

The image forming method of the invention preferably includes, after the application of the ink, thermally fixing an image formed from the ink onto the recording medium by contacting a heated surface to the image. By performing this, rubbing resistance of the image may be further improved.

The thermal fixing may be preferably conducted at a temperature that is equal to or higher than the minimum film-formation temperature (MFT) of the polymer particles in the image. By heating the image to a temperature of not less than the MFT, a film of polymer particles is formed to strengthen the image.

In a case in which a pressure is applied together with heat, the pressure may be preferably in the range of from 0.1 MPa to 3.0 MPa, more preferably from 0.1 MPa to 1.0 MPa, and still more preferably from 0.1 MPa to 0.5 MPa, from the viewpoint of obtaining a smooth surface.

The method of heating is not particularly limited, and preferable examples thereof include a non-contact drying method, such as a method of heating with a heat generator such as a nichrome wire heater, a method of supplying a warm or hot air, or a method of heating with a halogen lamp, an infrared lamp, or the like.

The method of applying heat and pressure is not particularly limited, and preferable examples thereof include a contact thermal fixing method, such as a method of pressing a hot plate against an image-formed surface of the recording medium, a method in which a heat-pressurization apparatus is used to pass the recording medium through a pressure contact portion, the heat-pressurization apparatus having a pair of heat-pressurization rollers or a pair of heat-pressurization belts, or a heat-pressurization belt disposed at the image-recorded surface of the recording medium and a support roller disposed at the opposite side of the recording medium. The pressure contact portion is thus formed between the pair of rollers or between the pair of heat-pressurization belts or between the heat-pressurization belt and the support roller.

When applying heat and pressure, the nip time may be preferably from 1 msec to 10 sec, more preferably from 2 msec to 1 sec, and still more preferably from 4 msec to 100 msec. The nip width may be preferably from 0.1 mm to 100 mm, more preferably from 0.5 mm to 50 mm, and still more preferably from 1 mm to 10 mm.

The heat-pressurization roller may be a roller made of metal, or a roller having a metal core covered with a coating layer made of an elastic material and, as necessary, a surface layer (also referred to as a release layer).

The metal core in the latter case may be, for example, a cylindrical body made of iron, aluminum, SUS (stainless steel), or the like. At least a part of the surface of the metal core may be coated with a coating layer. Particularly, the coating layer may be preferably formed by using a silicone resin or a fluororesin, each of which has release properties. Further, it may be preferable that a heat generator is placed in the interior of the metal core of one of the heating and pressurization rollers. Heating treatment and pressure application treatment may be performed simultaneously by passing the recording medium between the rollers. In an embodiment, the recording medium is heated by being nipped between two heating rollers, if necessary. Preferable examples of the heat generator include a halogen lamp heater, a ceramic heater, and a NICHROME wire.

The belt substrate for forming the heat-pressurization belt for use in the heat-pressurization apparatus may be preferably a seamless electroformed nickel, and the thickness of the substrate may be preferably from 10 µm to 100 µm. Examples of a material of the belt substrate, which can be used, include aluminum, iron, and polyethylene, as well as nickel. In a case in which a silicone resin or a fluororesin is provided, the thickness of a layer formed by using the resin may bes preferably from 1 µm to 50 µm, and more preferably from 10 µm to 30 µm.

In order to realize the pressure (nip pressure) described above, for example, elastic members that exhibit tension, such as a spring, may be selected and disposed at both ends of rollers, such as a heat-pressurization roller, such that a desired nip pressure can be obtained in consideration of the nip gap.

In a case in which heat-pressurization rollers or heat-pressurization belts are used, the conveyance speed of the recording medium may be preferably from 200 mm/sec to 700 mm/sec, more preferably from 300 mm/sec to 650 mm/sec, and even more preferably from 400 mm/sec to 600 mm/sec.

### Recording Medium

In the image forming method of one aspect of the invention, an image is formed on a recording medium as described above. The recording medium is not particularly limited, and may be coated paper which has cellulose as a main component and is used for general offset printing and the like.

Coated paper may be preferably used as the recording medium.

The coated paper is paper obtained by applying, onto a surface of high-quality paper or acid-free paper, which is cellulose-based and generally not surface-treated and serves as a support, a coating material containing an inorganic pigment and the like to form a coating layer, which may be also referred to as a coated layer. Although the coated paper tends to cause gloss unevenness in general, the gloss unevenness may be effectively suppressed by including phosphoric acid or a phosphoric acid compound in the treatment liquid. Specific preferable examples of the coated paper include art paper, coat paper, light-weight-coated paper, and very-light-weight-coated paper.

There are no particular restrictions on the inorganic pigment that is contained in the coating layer. From the viewpoint that the effect of suppressing the occurrence of gloss unevenness is more notably exhibited by having phosphoric acid or a phosphoric acid compound be contained in the treatment liquid, at least one selected from the group consisting of silica, kaolin, clay, calcined clay, zinc oxide, tin oxide, magnesium sulfate, aluminum oxide, aluminum hydroxide, pseudo-boehmite, calcium carbonate, satin white, aluminum silicate, smectite, zeolite, magnesium silicate, magnesium carbonate, magnesium oxide, and diatomaceous earth may be preferable as the inorganic pigment. Among them, calcium carbonate, silica, and kaolin may be more preferable. In a case where calcium carbonate is contained in the coating layer, the effect of suppressing gloss unevenness by the use of the phosphoric acid or a phosphoric acid compound in the treatment liquid may become particularly significant.

The recording medium may be a commercially available product. Specific examples thereof include high-quality papers (A) such as OK PRINCE JO-SHITSU (trade name) manufactured by Oji Paper Co., Ltd., and SHIRAOI (trade name) manufactured by Nippon Paper Industries Co., Ltd.; very-light-weight-coated papers such as OK EVER LIGHT COAT (trade name) manufactured by Oji Paper Co., Ltd., and AURORA S (trade name) manufactured by Nippon Paper Industries Co., Ltd.; light-weight-coated papers (A3) such as OK COAT L (trade name) manufactured by Oji Paper Co., Ltd. and AURORA L (trade name) manufactured by Nippon Paper Industries Co., Ltd.; coat papers (A2, B2) such as TOPCOAT PLUS (trade name) manufactured by Oji Paper Co., Ltd. and AURORA COAT (trade name) manufactured by Nippon Paper Industries Co., Ltd.; and art papers (Al) such as OK KANAFUJI PLUS (trade name) manufactured by Oji Paper Co., Ltd. and TOKUBISHI ART (trade name) manufactured by Mitsubishi Paper Mills Ltd. Various kinds of inkjet-recording paper used for photograph may also be used as the recording medium.

Among them, a recording medium having a water absorption coefficient Ka of from 0.05 mL/m2·ms1/2 to 0.5 mL/m2·ms1/2 may be preferable, a recording medium having a water absorption coefficient Ka of from 0.1 mL/ mL/m2·ms1/2 to 0.4 mL/m2·ms1/2 may be more preferable, and a recording medium having a water absorption coefficient Ka of from 0.2 mL/m2·ms1/2 to 0.3 mL/m2·ms1/2 may be still more preferable, from the viewpoints of suppressing the colorant migration more effectively and obtaining a high-quality image having more favorable color density and hue than those of conventional art.

The water absorption coefficient Ka has the definition described in JAPAN TAPPI Pulp and Paper Testing Method No. 51: 2000 (published by JAPAN TAPPI). Specifically, the water absorption coefficient Ka is calculated from a difference in water transfer amount at a contact time of 100 ms and at a contact time of 900 ms, which can be measured using an automatic scanning liquid absorptometer KM500WIN (trade name, manufactured by Kumagai Riki Kogyo Co., Ltd.)

The amounts of the treatment liquid and the ink composition applied onto the recording medium may be preferably regulated in accordance with necessity. For example, the application amount of the treatment liquid may be varied in view of regulating physical properties (such as viscoelasticity) of coagulants formed by mixing of the treatment liquid and the ink composition in consideration of characteristics of the recording medium.

### EXAMPLES

Hereinafter, the invention will be specifically described with reference to Examples, but the invention is not limited to these Examples. Unless stated otherwise, "part(s)" and "%" are based on mass, and "wt%" means "% by weight".

The weight average molecular weight was measured by gel permeation chromatography (GPC). The GPC was performed by using HLC-8220GPC (manufactured by Tosoh Corporation), three columns TSKGEL SUPER HZM-H (trade name, manufactured by Tosoh Corporation; 4.6 mmID×15cm), and tetrahydrofuran (THF) as an eluate. Further, the measurement was performed with a refractive index detector under the conditions at a sample concentration of 0.45% by mass, a flow rate of 0.35 mL/min, a sample ejection amount of 10µL, and a measurement temperature of 40°C. A calibration curve was obtained from eight samples of REFERENCE SAMPLE TSK STANDARD, POLYSTYRENE (trade name, manufactured by Tosoh Corporation): "F-40", "F-20", "F-4", "F-1", "A-5000", "A-2500", "A-1000" and "n-propylbenzene".

### <Synthesis of Polymer compound containing Structural unit represented by Formula (A)>

Polymers aa-1 to aa-13, which are water-soluble polymer compounds containing a structural unit represented by Formula (A), were synthesized.

Polymer aa-1 was synthesized according to the following scheme.

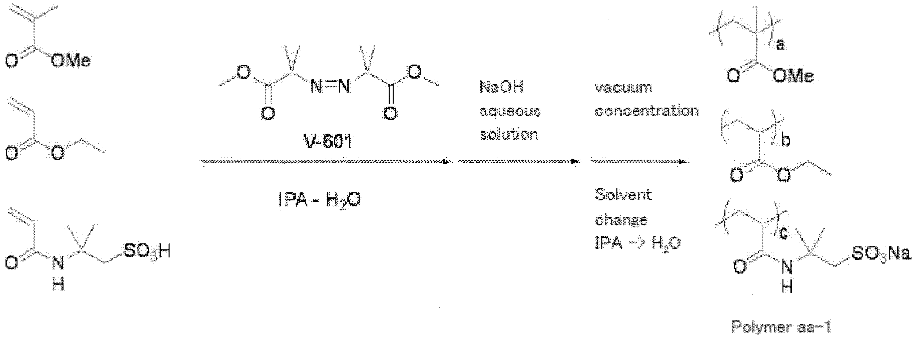

This scheme used methyl methacrylate, ethyl acrylate, and acrylamide-2-methylpropanesulfonic acid as monomers. The mass ratio of these monomers [methyl methacrylate (MMA)(a)/ethyl acrylate (EA)(b)/acrylamide-2-methylpropanesulfonic acid (AMPS)(c]] was 56/17/27.

Details of the operation of the scheme were as follows.

To a 200 mL three-neck flask equipped with a stirrer, a thermometer, a reflux condenser tube, and a nitrogen gas introducing tube, 30.0 g of isopropyl alcohol was added, and heated to 65°C in a nitrogen atmosphere.

Methyl methacrylate (28.0 g), ethyl acrylate (8.5 g), acrylamide-2-methylpropanesulfonic acid (13.5 g), isopropyl alcohol (30 g), water (15 g), and a polymerization initiator (trade name: V-601, manufactured by Wako Pure Chemical Industries, Ltd.) (2.97 g (0.0129 mol)); 3 mol % based on the total mole number of monomers (0.430 mol)) were added dropwise thereto at a constant velocity such that the addition could be completed in 2 hours.

After the addition was completed, the mixture was stirred for 2 hours. Thereafter, V-601 (described above; 1.5 mol% (1.48 g) based on the total mole number of monomers) and isopropyl alcohol (3.0 g) were added thereto, followed by stirring for 2 hours.

The thus-obtained polymer solution was neutralized with a sodium hydroxide solution which provides an amount of substance (mole number) being equivalent to that of the above acrylamide-2-methylpropanesulfonic acid, and isopropyl alcohol was distilled off by vacuum concentration. Water was added thereto until the total amount of the polymer solution reached 250 g. A polymer solution containing 20% by mass of a polymer aa-1 was thus obtained.

The weight-average molecular weight (Mw) of the polymer aa-1 was 40,200 (calculated as polystyrene-equivalent value according to gel permeation chromatography (GPC), the columns used therefor were TSKGEL SUPER HZM-H, TSKGEL SUPER HZ4000, and TSKGEL SUPER HZ200 (trade names, manufactured by TOSOH CORPORATION).

### (Synthesis of Polymers aa-2 to aa-13)

Polymers aa-2 to aa-13 were synthesized in the similar manner as the polymer aa-1 except that the species and ratio of the monomers used in the synthesis were changed as shown in the following Tables 2-1 to 2-4. In each of the synthesis of the polymers aa-2 to aa-13, the total mass of the monomers was the same as that in the synthesis of the polymer aa-1.

### <Synthesis of polymer dispersant P-1>

A polymer dispersant P-1 was synthesized as shown below according the following scheme.

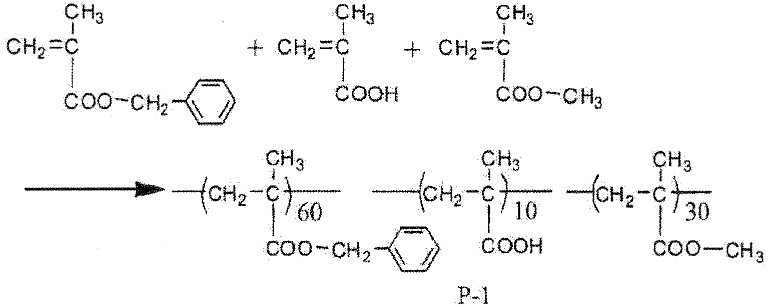

88 g of methyl ethyl ketone was put in a 1000 ml three-necked flask equipped with a stirrer and a cooling tube and heated to 72°C in a nitrogen atmosphere, to which a solution in which 0.85 g of dimethyl-2,2'-azobisisobutyrate, 60 g of benzyl methacrylate, 10 g of methacrylic acid, and 30 g of methyl methacrylate were dissolved in 50 g of methyl ethyl ketone was dropped over 3 hours. After completing the dropping and further allowing the mixture to react for 1 hour, a solution in which 0.42 g of dimethyl-2,2'-azobisisobutyrate was dissolved in 2 g of methyl ethyl ketone was added, and the mixture was heated for 4 hours while elevating the temperature to 78°C. The obtained reaction solution was re-precipitated twice in a great excess of hexane and a precipitated resin was dried, thereby obtaining 96 g of a polymer dispersant P-1. The number of each structural unit of the polymer dispersant P-1 shown above represents a mass ratio.

The composition of the obtained resin was confirmed by ¹H-NMR and the weight-average molecular weight (Mw) determined by GPC was 44,600. Further, when an acid value was determined according to the method described in JISK0070:1992, the acid value was 65.2 mgKOH/g.

### <Preparation of Pigment dispersion liquid>

### (Preparation of Cyan dispersion liquid)

10 parts of Pigment Blue 15:3 (trade name: PHTHALOCYANINE BLUE A220, a cyan pigment, manufactured by Dainichiseika Color & Chemicals Mfg, Co., Ltd.), 5 parts of the polymer dispersant P-1, 42 parts of methyl ethyl ketone, 5.5 parts of an aqueous 1 N NaOH solution, and 87.2 parts of ion exchange water were mixed and dispersed with zirconia beads having a diameter of 0.1 mm for 2 to 6 hours in a bead mill.

Methyl ethyl ketone was removed from the resulting dispersion under reduced pressure at 55°C. After part of the water was further removed, the dispersion was centrifuged at 8,000 rpm for 30 minutes using a 50 mL centrifuge tube in a high-speed centrifugal refrigerating machine (trade name: 7550, manufactured by KUBOTA Manufacturing Corporation), and the resultant supernatant was separated from the precipitate and was collected. The pigment concentration was then determined from the absorption spectrum. As a result, a dispersion (a cyan dispersion liquid C) of resin-coated pigment particles (the pigment coated with the polymer dispersant) having a pigment concentration of 10.2% by mass was obtained. The average particle diameter of the obtained cyan dispersion liquid C was 105 nm.

### (Preparation of Magenta dispersion liquid)

A dispersion of resin-coated pigment particles (pigment coated with a polymer dispersant) (a magenta dispersion liquid M) was prepared in the similar manner as the preparation of the cyan dispersion liquid, except that Pigment Red 122 was used in place of Pigment Blue 15:3 (trade name: PHTHALOCYANINE BLUE A220, manufactured by Dainichiseika Color & Chemicals Mfg. Co., Ltd.). The average particle diameter of the obtained magenta dispersion liquid M was 85 nm.

### (Preparation of Yellow dispersion liquid)

A dispersion of resin-coated pigment particles (pigment coated with a polymer dispersant) (a yellow dispersion liquid Y) was prepared in the similar manner as the preparation of the cyan dispersion liquid, except that a yellow pigment, Pigment Yellow 74, was used in place of Pigment Blue 15:3 (trade name: PHTHALOCYANINE BLUE A220, manufactured by Dainichiseika Color & Chemicals Mfg. Co., Ltd.). The average particle diameter of the obtained yellow dispersion liquid Y was 82 nm.

### (Preparation of Black dispersion liquid)

A dispersion of resin-coated pigment particles (pigment coated with a polymer dispersant) (a black dispersion liquid K) was prepared in the similar manner as the preparation of the cyan dispersion liquid, except that a carbon black (NIPEX® 160-IQ manufactured by Degussa Co.) was used in place of Pigment Blue 15:3 (trade name: PHTHALOCYANINE BLUE A220, manufactured by Dainichiseika Color & Chemicals Mfg. Co., Ltd.). The average particle diameter of the obtained black dispersion liquid K was 130 nm.

### <Preparation of Self-dispersible resin particles>

To a 2 L three-neck flask equipped with a stirrer, a thermometer, a reflux condenser tube, and a nitrogen gas introducing tube, 360.0 g of methyl ethyl ketone was added, and heated to 75°C. While keeping the temperature in the reaction vessel at 75°C, a mixture solution of 180.0 g of phenoxy ethyl acrylate, 162.0 g of methyl methacrylate, 18.0 g of acrylic acid, 72 g of methyl ethyl ketone, and 1.44 g of V-601 (trade name, manufactured by Wako Pure Chemical Industries, Ltd.) was added dropwise thereto at a constant velocity such that the addition could be completed in 2 hours. After the addition was completed, a solution of 0.72 g of V-601 (described above) and 36.0 g of methyl ethyl ketone was added and stirred at 75°C for 2 hours. A solution of 0.72 g of "V-601" and 36.0 g of isopropanol was further added and stirred at 75°C for 2 hours. The mixture was then heated to 85°C and further stirred for 2 hours. The weight-average molecular weight (Mw) of the obtained copolymer was 64,000 (calculated as polystyrene-equivalent value according to gel permeation chromatography (GPC), the used columns were TSKGEL SUPER HZM-H, TSKGEL SUPER HZ4000, and TSKGEL SUPER HZ200 (trade names, manufactured by TOSOH CORPORATION). The acid value of the copolymer was 38.9 (mgKOH/g).

Then, 668.3 g of the polymerization solution was weighed, and 388.3 g of isopropanol and 145.7 ml of a 1 mol/L NaOH aqueous solution were added to the polymerization solution, and then the temperature inside the reaction vessel was elevated to 80°C. Thereafter, 720.1 g of distilled water was added dropwise into the reaction vessel at a rate of 20 ml/min so as to form water dispersion. Thereafter, the contents of the reaction vessel was allowed to stand, under atmospheric pressure, at a reaction vessel inside temperature of 80°C for 2 hours, and then 85°C for 2 hours, and then 90°C for 2 hours. Subsequently, the inside of the reaction vessel was depressurized, and the isopropanol, the methyl ethyl ketone, and the distilled water, which were in a total amount of 913.7 g, were removed. As a result, water dispersion (emulsion) of self-dispersible resin particles (B-01) having a solid concentration of 28.0% was obtained. The number of each structural unit of the example of the compound (B-01) shown below represents a mass ratio. Hereinafter, the same holds for each structural formula.

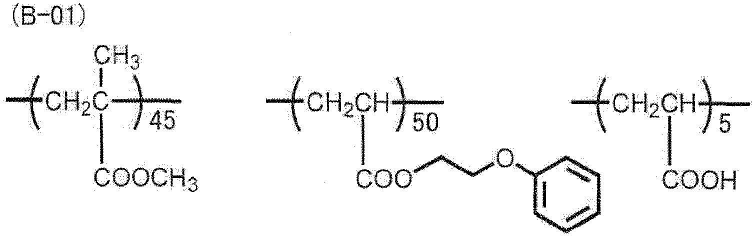

### <Production of Ink>

The obtained pigment dispersion liquids (the cyan dispersion liquid C, the magenta dispersion liquid M, and the yellow dispersion liquid Y, and the black dispersion liquid K) and the self-dispersible resin particles B-01 were used, and the respective components of the ink composition shown in Table 1 were mixed to prepare ink compositions (a magenta ink compositions M1 and M2, black ink compositions K1 and K2, cyan ink compositions C1 and C2, and yellow ink compositions Y1 and Y2).

Each prepared ink composition was charged into a disposable plastic syringe and then filtrated through a polyvinylidene fluoride (PVDF) filter with a pore size of 5 µm (trade name: MILLEX-SV, 25 mm in diameter, manufactured by Millipore Corporation) to give a final ink product (magenta inks M1 and M2, black inks K1 and K2, cyan inks C1 and C2, and yellow inks Y1 and Y2).

The pH of each final ink product was measured with a pH meter WM-50EG (trade name, manufactured by DKK-TOA CORPORATION). The surface tension was measured using FASE AUTOMATIC SURFACE TENSIONMETER CBVP-Z (trade name, manufactured by Kyowa Interface Science Co., Ltd.).

The results are shown in Table 1.

**Table 1**

| Ink composition | M1 | K1 | C1 | Y1 | M2 | K2 | C2 | Y2 |
|---|---|---|---|---|---|---|---|---|
| Magenta pigment (pigment red 122) | 4% | - | - | - | 4% | - | - | - |
| Black pigment (carbon black) | - | 4% | - | - | - | 4% | - | - |
| Cyan pigment (pigment blue 15:3) | - | - | 4% | - | - | - | 4% | - |
| Yellow pigment (pigment yellow 74) | - | - | - | 4% | - | - | - | 4% |
| Pigment dispersant (polymer dispersant P-1) | 2% | 2% | 2% | 2% | 2% | 2% | 2% | 2% |
| NEWPOL® GP-250 | 10% | 10% | 10% | 10% | 10% | 10% | 10% | 10% |
| Tripropylene glycol monomethyl ether | 5% | 5% | 5% | 5% | 5% | 5% | 5% | 5% |
| OLFINE® E1010 | 1% | 1% | 1% | 1% | 1% | 1% | 1% | 1% |
| Self-dispersible polymer particle (B-01) | 8% | 8% | 8% | 8% | 8% | - | - | - |
| Water | 70% | 70% | 70% | 70% | 78% | 78% | 78% | 78% |
| Physical properties of Final ink: pH | 8.5 | 8.6 | 8.5 | 8.5 | 8.2 | 8.2 | 8.3 | 8.3 |
| Physical properties of Final ink: Surface tension (mN/m) | 34.8 | 35.2 | 35 | 35.1 | 34.6 | 35.2 | 35.2 | 34.8 |

NEWPOL® GP-250: Organic solvent, manufactured by Sanyo Chemical industries, Ltd.

OLFINE® E1010: Nonionic surfactant, manufactured by Nissin Chemical Co., Ltd.

### <Production of Treatment liquid>

Treatment liquids 1 to 32 (treatment liquids No.1 to 32) shown in Tables 2-1 to 2-4 were produced.

The process will be described by taking the production of a treatment liquid 7 for explanation.

### (Production of the treatment liquid 7)

The following compositions were mixed to produce the treatment liquid 7.

### - Compositions of the treatment liquid 7 -

| | |
|---|---|
| Diethylene glycol monoethyl ether | 4% by mass |
| Tripropylene glycol monomethyl ether | 4% by mass |
| Organic acidic compound (malonic acid) | 17.2% by mass |
| Phosphoric acid | 4.3% by mass |
| Water-soluble polymer (Polymer aa-1) | 0.5% by mass |
| Benzotriazol | 1% by mass |
| Ion exchange water | balance (to 100% by mass) |

### (Treatment liquids 1 to 6 and 8 to 32)

In the production of the treatment liquid 7, Treatment liquids 1 to 6 and 8 to 32 were produced in the similar manner as the treatment liquid 7, except that the species and the content of the water-soluble polymer, the species of the organic acidic compound, and the presence of the phosphoric acid or the phosphoric acid compound (hereinafter also referred to as "phosphoric acid etc.") were changed as shown in the following Tables 2-1 to 2-4.

In the treatment liquids 1 to 6 and 8 to 32, the total content of the organic acidic compound and the total content of phosphoric acid and the like were set to be the same as those in the treatment liquid 7.

In examples in which two species of the organic acidic compounds were used, the mass ratio of the two species of the compounds was 1:1. In the example in which three kinds of the organic acidic compounds were used, the mass ratio of the three species of the compounds was 1:1:1.

### <Ink set>

Ink sets 1 to 35, in which the final inks (the magenta inks M1 and M2, black inks K1 and K2, cyan inks C1 and C2, and yellow inks Y1 and Y2) and the treatment liquids (treatment liquids 1 to 32) were combined as shown in Tables 2-1 to 2-4, were prepared.

In Tables 2-1 to 2-4, a combination of the magenta ink M1, the black ink K1, the cyan ink C1, and yellow ink Y1 was referred to as "Ink No.1" (Ink 1), and a combination of the magenta ink M2, the black ink K2, the cyan ink C2, and the yellow ink Y2 was referred to as "Ink No.2" (Ink 2).

### <Ink-jet image recording>

Image recording was performed under the following image recording conditions, using a TOKUBISHI ART (trade name, manufactured by Mitsubishi Paper Mills Limited.) having a size of A4 as a recording medium and the ink sets 1 to 35 shown in Tables 2-1 to 2-4.

In the following image recording, the jetting of the ink was started within 10 seconds after the application of the treatment liquid.

### (Treatment liquid application)

Immediately before the application of the ink on the recording medium, the treatment liquid was applied in an amount of 1.7 g/m² to the surface of the recording medium using a coating bar.

Then, the treatment liquid applied on the recording medium was dried under the following conditions.

### - Drying conditions for treatment liquid (air blow drying) -

Blow speed: 15 m/s
Temperature and heating method: The recording medium was heated through the rear surface (the surface which is opposite to the side to which the treatment liquid was applied) of the recording medium using a contact type flat heater, such that the surface temperature (temperature at the side to which the treatment liquid was applied) of the recording medium reached 60°C.
Air blow region: 450 mm (drying time: 0.7 second)

### (Ink application)

Four-color single-pass image formation was performed on the recording medium to which the treatment liquid was applied under the following conditions.

Specifically, the inks of each color were applied (jetted) to the treatment liquid on the recording medium to which the treatment liquid had been applied under the following conditions and an image was formed.
Head: 1,200 dpi/20 inch-width piezo full-line heads were installed for four colors.
Amount of jetted liquid droplets: 2.4 pL
Drive frequency: 30 kHz (conveyance speed of recording medium: 635 mm/sec)

Then, the ink applied on the recording medium was dried under the following conditions.

### - Drying conditions for ink (Air blow drying) -

Blow speed: 15 m/s
Temperature: The recording medium was heated through the rear surface (the surface which is opposite to the side to which the treatment liquid was applied) of the recording medium using a contact type flat heater, such that the surface temperature (temperature at the side to which the ink was applied) of the recording medium reached 60°C.
Air blow region: 640 mm (drying time: 1 second)

### (Thermal fixation)

The image formed by applying the ink was thermal fixed under the following conditions using a silicon rubber roller (hardness: 50°, nip width: 5 mm).

Thus, a sample in which the image was formed on the recording medium was obtained.

### - Conditions of thermal fixation -

Roller temperature: 90°C
Pressure: 0.8 MPa

### <Evaluation>

### 1. Image uniformity

In the ink application, a cyan ink was applied on the entire surface to produce a cyan solid image.

The obtained cyan solid image was subjected to the thermal fixation.

The cyan solid image after thermal fixation was visually observed. The uniformity of the image was evaluated according to the following criterion. The evaluation results are shown in Tables 2-1 to 2-4.

### - Evaluation criteria -

A: The surface was entirely uniform with no unevenness in color density and no white stripes.
B: The surface was almost entirely uniform, although fine white spots were slightly observed when well seen.
C: Difference in density variation was small, although fine white spots were slightly observed.
D: Practically acceptable, although scattered white stripes and partial density variations were found.
E: Practically unacceptable. Large stripe-like density unevenness was found.

### 2. Evaluation of image graininess

In the ink application, a magenta ink was solidly applied to the treatment liquid to form a magenta solid image. A cyan ink was applied to the obtained magenta solid image so as to have a halftone dot area rate of 50% to 80%, and a secondary color image was produced.

The obtained secondary color image was subjected to the thermal fixation.

The secondary color image after thermal fixation was visually observed. The image graininess was evaluated according to the following criteria. The evaluation results are shown in Tables 2-1 to 2-4.

### - Evaluation criteria -

A: No graininess was observed in the entire. The image was uniform.
B: The image was almost uniform in the entire, although graininess was slightly observed.
C: Graininess was slightly observed.
D: Practically acceptable, although graininess was observed.
E: Practically unacceptable. A lot of graininess with high image density variation, which cannot be regarded as being uniform.

### 3. Evaluation of Gloss unevenness of image

A secondary color image was formed on the recording medium in the similar manner as that in the evaluation of the image graininess (hereinafter, the surface in which the image has been formed is referred to as "front surface"). Then, a secondary color image was formed on a part of the back of the recording medium (the surface at the side where the secondary color image is not formed) under the same conditions as those of the secondary color image formed on the front surface. Thus, a one-sided image portion in which the secondary color image was formed only at one side and a double-sided image portion in which the secondary color image was formed at both sides were formed on one recording medium.

Then, the glossiness of the secondary color image in the one-sided image portion (hereinafter referred to as "glossiness (a)") and the glossiness of the secondary color image in the double-sided image portion (hereinafter referred to as "glossiness (b)") were respectively measured. Here, the glossiness was measured at an angle of incidence of 60° using HORIBA GLOSS CHECKER IG-331 (trade name, manufactured by HORIBA, Ltd.).

Based on the difference between the glossiness (a) and the glossiness (b), the gloss unevenness was evaluated according to the following evaluation criteria. The evaluation results are shown in Tables 2-1 to 2-4.

The gloss unevenness mentioned herein is that caused by calcium salts generated by a reaction of calcium carbonate contained in the recording medium with the organic acidic compound contained in the treatment liquid. Thus, as the difference between the glossiness (a) and the glossiness (b) is larger, the gloss unevenness becomes significant.

### - Evaluation criteria -

A: The difference between the glossiness (a) and the glossiness (b) was less than 1%.
B: The difference between the glossiness (a) and the glossiness (b) was 1% or more and less than 5%.
C: Within acceptable range. The difference between the glossiness (a) and the glossiness (b) was 5% or more and less than 10%.
D: Practically unacceptable. The difference between the glossiness (a) and the glossiness (b) was 10% or more.

**Table 2-1**

| Ink set No. | Ink No. | Treatment liquid | | | | | | | Evaluation results | | | Remarks |
|---|---|---|---|---|---|---|---|---|---|---|---|---|
| | | No. | Water-soluble polymer | | | | Organic acidic compound | Phosphoric acid and/or others | Uniformity | Graininess | Gloss unevenness | |
| | | | No. | Species | Mw | Content | | | | | | |
| 1 | 1 | 1 | None | | | | Malonic acid | Phosphoric acid | E | E | D | Comparative example |
| 2 | 1 | 2 | - | Polyacrylamide | 10000 | 5wt% | Malonic acid | Phosphoric acid | E | E | D | Comparative example |
| 3 | 1 | 3 | - | Polyvinylpyrrolidone | 10000 | 5wt% | Malonic acid | Phosphric acid | E | E | D | Comparative example |
| 4 | 1 | 4 | - | Polyethylene glycol | 8000 | 5wt% | Malonic acid | Phosphoric acid | E | E | D | Comparative example |
| 5 | 1 | 5 | - | Polyvinyl alcohol | 65000 | 5wt% | Malonic acid | Phosphric acid | E | E | D | Comparative example |
| 6 | 2 | 1 | None | | | | | Phosphoric acid | E | Malonic acid | D | Comparative example |
| 7 | 2 | 6 | - | Polyacrylic acid | 25000 | 5wt% | Malonic acid | Phosphoric acid | D | D | B | Reference example |
| 8 | 2 | 7 | aa-1 | MMA+EA+AMPS(56/ 17/27) | 40200 | 5wt% | Malonic acid | Phosphoric acid | C | D | B | The invention |
| 9 | 1 | 8 | - | Polyacrylic acid | 25000 | 5wt% | Malonic acid | None | D | D | C | Reference example |
| 10 | 1 | 6 | - | Polyacrylic acid | 25000 | 5wt% | Malonic acid | Phosphoric acid | D | D | B | Reference example |

**Table 2-2**

| | | Treatment liquid | | | | | | | Evaluation results | | | Remarks |
|---|---|---|---|---|---|---|---|---|---|---|---|---|
| Ink set No. | Ink No. | No. | Water-soluble polymer | | | | Organic acidic compound Phosphoric acid and/or others | | Uniformity | Graininess | Gloss unevenness | |
| | | | No. | Species | Mw | Content | | | | | | |
| 11 | 1 | 9 | aa-1 | MMA+EA+AMPS(56/ 17/ 27) | 40200 | 0.5wt% | Malonic acid | None | C | C | C | The invention |
| 12 | 1 | 7 | aa-1 | MMA+EA+AMPS(56/ 17/ 27) | 40200 | 0.5wt% | Malonic acid | Phosphoric acid | C | C | B | The invention |
| 13 | 1 | 10 | aa-2 | MMA+EA+AMPS(60/ 13/ 27) | 45000 | 0.5wt% | Malonic acid | Phosphoric acid | C | C | B | The invention |
| 14 | 1 | 11 | aa-3 | MMA+AMPS(73/ 27) | 43000 | 0.5wt% | Malonic acid | Phosphoric acid | B | B | B | The invention |
| 15 | 1 | 12 | aa-3 | MMA+AMPS(73/ 27) | 43000 | 0.5wt% | Malonic acid+ Malic acid | Phosphoric acid | B | B | B | The invention |
| 16 | 1 | 13 | aa-3 | MMA+AMPS(73/ 27) | 43000 | 0.5wt% | Malonic acid +Glutaric acid | Phosphoric acid | B | B | B | The invention |
| 17 | 1 | 14 | aa-4 | MMA+SPA(K)(73/ 27) | 29700 | 0.5wt% | Malonic acid | Phosphoric acid | B | B | B | The invention |
| 18 | 1 | 15 | aa-5 | MMA+BMA+AMPS(58/ 15/27) | 64800 | 0.5wt% | Malonic acid | Phosphoric acid | B | B | B | The invention |
| 19 | 1 | 16 | aa-6 | MMA+TBMA+AMPS(58/ 15/27) | /35400 | 0.5wt% | Malonic acid | Phosphoric acid | A | A | A | The invention |
| 20 | 1 | 17 | aa-7 | MMA+TBMA+AMPS(43/ 30/27) | /31700 | 0.5wt% | Malonic acid | Phosphoric acid | A | A | A | The invention |

**Table 2-3**

| Ink set No. | Ink No. | Treatment liquid | | | | | | | Evaluation results | | | Remarks |
|---|---|---|---|---|---|---|---|---|---|---|---|---|
| | | No. | Water-soluble polymer | | | | Organic acidic compound | Phosphoric acid and/or others | Uniformity | Graininess | Gloss unevenness | |
| | | | No. | Species | Mw | Content | | | | | | |
| 21 | 1 | 18 | aa-8 | MMA+IBOMA+AMPS(58/ 15/ 28) | 66000 | 0.5wt% | Malonic acid | Phosphoric acid | A | A | A | The invention |
| 22 | 1 | 19 | aa-9 | MMA+CHIMA+AMPS(58/ 15/ 28) | 75200 | 0.5wt% | Malonic acid | Phosphoric acid | A | A | A | The invention |
| 23 | 1 | 20 | aa-10 | MMA+BzMA+AMPS(58/ 15/ 27) | 42700, | 0.5wt% | Malonic acid | Phosphoric acid | A | A | A | The invention |
| 24 | 1 | 21 | aa-11 | MMA+BzMA+AMPS(43/ 30/ 27) | 42300 | 0.5wt% | Malonic acid | Phosphoric acid | A | A | A | The invention |
| 25 | 1 | 22 | aa-11 | MMA+BzMA+AMPS(40/ 30/ 27) | 42300 | 0.5wt% | Malic acid | Phosphoric acid | A | A | A | The invention |
| 26 | 1 | 23 | aa-1 1 | MMA+BzMA+AMPS(43/ 30/ 27) | 42300 | 0.5wt% | Glutaric acid | Phosphoric acid | A | A | A | The invention |
| 27 | 1 | 24 | aa-11 | MMA+BzMA+AMPS(43/ 30/ 27) | 42300 | 0.5wt% | Malonic acid+Malic acid | Phosphoric acid | A | A | A | The invention |
| 28 | 1 | 25 | aa-11 | MMA+BzMA+AMPS(43/ 30/ 27) | 58300 | 0.5wt% | Malonic acid +Glutaric acid | Phosphoric acid | A | A | A | The invention |
| 29 | 1 | 26 | aa-12 | MMA+BzMA+AMPS(33/ 40/ 27) | 55000 | 0.5wt% | Malonic acid | Phosphoric acid | A | A | A | The invention |
| 30 | 1 | 27 | aa-13 | MMA+BzMA+AMPS(53/ 30/ 27) | 55000 | 0.5wt% | Malonic acid | Phosphoric acid | A | A | A | The invention |

**Table 2-4**

| Ink set No. | Ink No. | Treatment liquid | | | | | | | Evaluation results | | | Remarks |
|---|---|---|---|---|---|---|---|---|---|---|---|---|
| | | No. | Water-soluble polymer | | | | Organic acidic compound | Phosphoric acid and/or others | Uniformity | Grain iness | Gloss unevenness | |
| | | | No. | Species | Mw | Content | | | | | | |
| 31 | 1 | 28 | aa-12 | MMA+BzMA+AMPS(33/ 30/ 27) | 58300 | 0.5wt% | Dimethylmalonic acid+Maleic acid | Polyphosphoric acid | A | A | A | The invention |
| 32 | 1 | 29 | aa-12 | MMA+BzMA+AMPS(33/ 40/ 27) | 58300 | 1.0wt% | Dimethylmalonic acid+Malonic acid | Polyphosphoric acid | A | A | A | The invention |
| 33 | 1 | 30 | aa-11 | MMA+BzMA+AMPS(43/ 30/ 27) | 42300 | 0.4wt% | Malic acid+Malonic acid | Phosphoric acid | A | A | A | The invention |
| 34 | 1 | 31 | aa-11 | MMA+BzMA+AMPS(43/ 30/ 27) | 42300 | 0.5wt% | Malic acid+Malonic acid+1,2,3-propanetricarboxylic acid | Phosphoric acid | A | A | A | The invention |
| 35 | 1 | 32 | aa-12 | MMA+BzMA+AMPS(33/ 40/ 27) | 58300 | 0.5wt% | Malonic acid+ Maleic acid | Polyphosphoric acid | A | A | A | The invention |

In Tables 2-1 to 2-4, the notation of "MMA+EA+AMPS (56/17/27)" of the column of the water-soluble polymer indicates the species and the composition ratio of the monomers.

For example, the notation of "MMA+EA+AMPS (56/17/27)" indicates a polymer prepared by copolymerizing monomers [methyl methacrylate (MMA)(a)/ethyl acrylate (EA)(b)/acrylamide-2-methylpropanesulfonic acid (AMPS)(c) at a mass ratio of 56/17/27.

The structures of the monomer species in Tables 2-1 to 2-4 will be shown below.

In the structures of the following monomer species, "Me" represents a methyl group, "Et" represents an ethyl group, "nBu" represents a normal butyl group, "tBu" represents a tertiarybutyl group, "Bz" represents a benzyl group, and "Ph" represents a phenyl group.

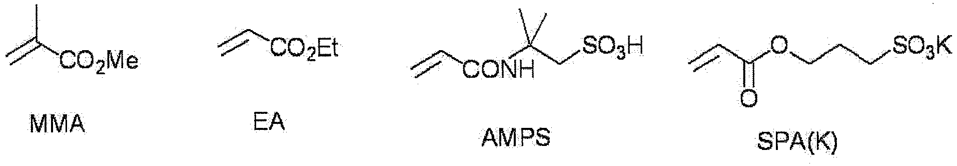

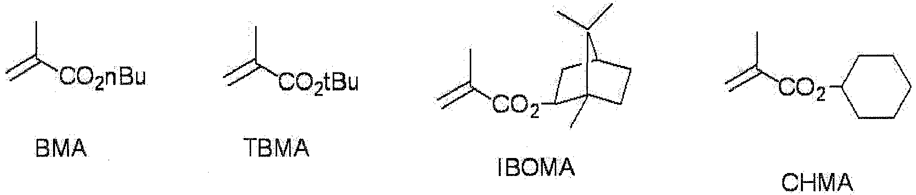

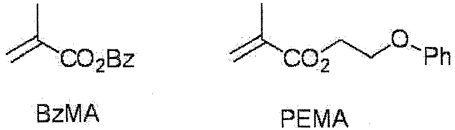

Polyacrylamide, polyvinyl pyrrolidone, polyethylene glycol, polyvinyl alcohol, and polyacrylic acid which were used as shown in the column of the water-soluble polymer in Tables 2-1 to 2-4 were commercially-available products.

A commercially-available polyphosphoric acid (CAS number: 8017-16-1) was used as polyphosphoric acid.

As shown in Tables 2-1 to 2-4, the ink sets 7 to 35, in which the treatment liquid contained the polymer compound having the structural unit represented by Formula (A), exhibited excellent image uniformity and image graininess suppression as compared with the ink sets 1 to 6, in which the treatment liquid did not contain the polymer compound.

Among the ink sets 7 to 35, the ink set 8 and 11 to 35, in which the treatment liquid contained a polymer compound having the structural unit represented by Formula (A) and the structural unit represented by Formula (B), exhibited further excellent image uniformity and further image graininess suppression.

It was found from the ink sets 7 to 35 that the gloss unevenness can be improved in a case where the treatment liquid contains phosphoric acid or a phosphoric acid compound.

The evaluation results on the cyan solid image produced by the cyan ink and the secondary color image produced by the magenta ink and the cyan ink have been explained above. The similar evaluation was performed on a halftone dot image (black monochrome image) having a halftone dot area rate of 50% to 80% which had been formed using a black ink. Then, the similar evaluation result as that of the secondary color image was obtained.

All publications, patent applications, and technical standards mentioned in this specification are herein incorporated by reference to the same extent as if each individual publication, patent application, or technical standard was specifically and individually indicated to be incorporated by reference.

## Claims

1. An ink set comprising:
an ink composition comprising a pigment; and
a treatment liquid comprising an organic acidic compound and a polymer compound comprising a structural unit represented by the following Formula (A) and a structural unit represented by the following Formula (B): 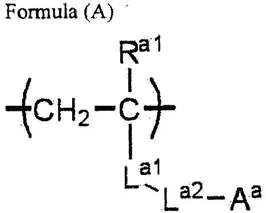 wherein, in Formula (A), R^{a1} represents a hydrogen atom; L^{a1} represents -COO- or -CONH-; L^{a2} represents an alkylene group having 1 to 12 carbon atoms; and A^{a} represents a carboxyl group or a salt thereof or a sulfonic group or a salt thereof; 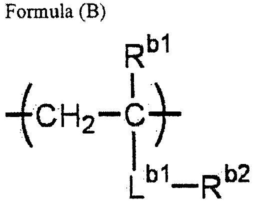 wherein, in Formula (B), R^{b1} represents a hydrogen atom or a methyl group; L^{b1} represents -COO-; and R^{b2} represents a linear aliphatic hydrocarbon group having 1 to 12 carbon atoms, a branched aliphatic hydrocarbon group having 3 to 12 carbon atoms, an alicyclic hydrocarbon group having 3 to 12 carbon atoms, an aralkyl group having 7 to 12 carbon atoms or an aryloxyalkyl group having 7 to 12 carbon atoms.

2. An ink set according to Claim 1, wherein the content of the structural unit represented by Formula (A) is from 10% by mass to 50% by mass based on the total amount of the polymer compound.

3. An ink set according to Claim 1 or Claim 2, wherein the weight-average molecular weight of the polymer compound is from 20,000 to 80,000.

4. An ink set according to any preceding Claim, wherein the content of the polymer compound is from 0.1% by mass to 10% by mass based on the total amount of the treatment liquid.

5. An ink set according to any preceding Claim, wherein the ink composition further comprises resin particles.

6. An ink set according to any preceding Claim, wherein the treatment liquid further comprises phosphoric acid and/or a phosphoric acid compound.

7. An ink set according to any preceding Claim, wherein the organic acidic compound is one or more of D-malic acid, L-malic acid, malonic acid, glutaric acid, dimethylmalonic acid and maleic acid.

8. An image forming method comprising:
applying a treatment liquid to a recording medium; and
applying an ink composition to the recording medium to which the treatment liquid has been applied,
the treatment liquid and the ink composition being those comprised in the ink set as defined in any preceding Claim.

9. An image forming method according to Claim 8, further comprising thermally fixing an image, which has been formed by the application of the ink composition, onto the recording medium.

10. An image forming method according to Claim 8 or Claim 9, wherein the recording medium comprises a coating layer comprising calcium carbonate.

## Patentansprüche

1. Tintenset, umfassend:
eine Tintenzusammensetzung, die ein Pigment umfasst; und
eine Behandlungsflüssigkeit, die eine organische saure Verbindung und eine Polymerverbindung, umfassend eine Struktureinheit der nachstehenden Formel (A) und eine Struktureinheit der nachstehenden Formel (B), umfasst: 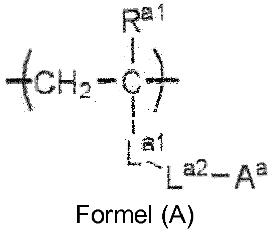 wobei in Formel (A) R^{a1} ein Wasserstoffatom darstellt; L^{a1} -COO- oder -CONH- darstellt; L^{a2} eine Alkylengruppe mit 1 bis 12 Kohlenstoffatomen darstellt und A^{a} eine Carboxylgruppe oder ein Salz davon oder eine Sulfonsäuregruppe oder ein Salz davon darstellt; 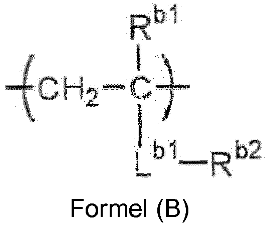 wobei in Formel (B) R^{b1} ein Wasserstoffatom oder eine Methylgruppe darstellt; L^{b1} -COO- darstellt und R^{b2} eine geradkettige aliphatische Kohlenwasserstoffgruppe mit 1 bis 12 Kohlenstoffatomen, eine verzweigte aliphatische Kohlenwasserstoffgruppe mit 3 bis 12 Kohlenstoffatomen, eine alicyclische Kohlenwasserstoffgruppe mit 3 bis 12 Kohlenstoffatomen, eine Aralkylgruppe mit 7 bis 12 Kohlenstoffatomen oder eine Aryloxyalkylgruppe mit 7 bis 12 Kohlenstoffatomen darstellt.

2. Tintenset gemäss Anspruch 1, wobei der Gehalt der Struktureinheit der Formel (A) 10 bis 50 Masse-%, bezogen auf die Gesamtmenge der Polymerverbindung, beträgt.

3. Tintenset gemäss Anspruch 1 oder Anspruch 2, wobei das gewichtsgemittelte Molekulargewicht der Polymerverbindung 20.000 bis 80.000 beträgt.

4. Tintenset gemäss einem der vorhergehenden Ansprüche, wobei der Gehalt der Polymerverbindung 0,1 bis 10 Masse-%, bezogen auf das Gesamtgewicht der Behandlungsflüssigkeit, beträgt.

5. Tintenset gemäss einem der vorhergehenden Ansprüche, wobei die Tintenzusammensetzung ferner Harzpartikel umfasst.

6. Tintenset gemäss einem der vorhergehenden Ansprüche, wobei die Behandlungsflüssigkeit ferner Phosphorsäure und/oder eine Phosphorsäureverbindung umfasst.

7. Tintenset gemäss einem der vorhergehenden Ansprüche, wobei die organische saure Verbindung eine oder mehrere aus D-Äpfelsäure, L-Äpfelsäure, Malonsäure, Glutarsäure, Dimethylmalonsäure und Maleinsäure ist.

8. Bildgebendes Verfahren, umfassend:
Aufbringen einer Behandlungsflüssigkeit auf ein Aufzeichnungsmedium; und
Aufbringen einer Tintenzusammensetzung auf das Aufzeichnungsmedium, auf das die Behandlungsflüssigkeit aufgebracht worden ist,
wobei die Behandlungsflüssigkeit und die Tintenzusammensetzung diejenigen sind, die von dem Tinteset, wie in einem der vorhergehenden Ansprüche definiert, umfasst sind.

9. Bildgebendes Verfahren gemäss Anspruch 8, das ferner die Wärmefixierung eines Bildes umfasst, das durch Aufbringen der Tintenzusammensetzung auf das Aufzeichnungsmedium gebildet worden ist.

10. Bildgebendes Verfahren gemäss Anspruch 8 oder Anspruch 9, wobei das Aufzeichnungsmedium eine Beschichtungsschicht umfasst, die Calciumcarbonat umfasst.

## Revendications

1. Ensemble d'encre comprenant :
une composition d'encre comprenant un pigment ; et
un liquide de traitement comprenant un composé organique acide et un composé polymère comprenant une unité structurale représentée par la Formule (A) suivante et une unité structurale représentée par la Formule (B) suivante : 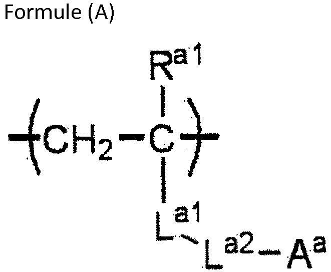 dans lequel, dans la Formule (A), R^{a1} représente un atome d'hydrogène ; L^{a1} représente -COO- or -CONH-; L^{a2} représente un groupe alkylène ayant 1 à 12 atomes de carbone ; et A^{a} représente un groupe carboxyle ou un sel de celui-ci ou un groupe sulfonique ou un sel de celui-ci ; 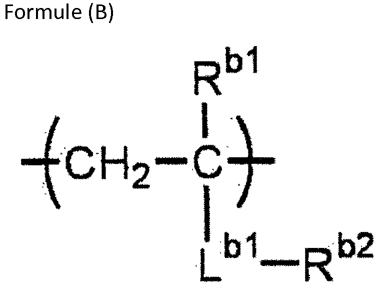 dans lequel, dans la Formule (B), R^{b1} représente un atome d'hydrogène ou un groupe méthyle; L^{b1} représente -COO-; et R^{b2} représente un groupe hydrocarboné aliphatique linéaire ayant 1 à 12 atomes de carbone, un groupe hydrocarboné aliphatique ramifié ayant 3 à 12 atomes de carbone, un groupe hydrocarboné alicyclique ayant 3 à 12 atomes de carbone, un groupe aralkyle ayant 7 à 12 atomes de carbone ou un groupe aryloxyalkyle ayant 7 à 12 atomes de carbone.

2. Ensemble d'encre selon la revendication 1, dans lequel la teneur en unité structurale représentée par la Formule (A) est de 10 % en masse à 50 % en masse sur la base de la quantité totale du composé polymère.

3. Ensemble d'encre selon la revendication 1 ou 2, dans lequel le poids moléculaire moyen en poids du composé polymère est de 20 000 à 80 000.

4. Ensemble d'encre selon l'une quelconque des revendications précédentes, dans lequel la teneur en composé polymère est de 0,1 % en masse à 10 % en masse sur la base de la quantité totale du liquide de traitement.

5. Ensemble d'encre selon l'une quelconque des revendications précédentes, dans lequel la composition d'encre comprend en outre des particules de résine.

6. Ensemble d'encre selon l'une quelconque des revendications précédentes, dans lequel le liquide de traitement comprend en outre un acide phosphorique et/ou un composé d'acide phosphorique.

7. Ensemble d'encre selon l'une quelconque des revendications précédentes, dans lequel le composé organique acide est un ou plusieurs parmi l'acide D-malique, l'acide L-malique, l'acide malonique, l'acide glutarique, l'acide diméthylmalonique et l'acide maléique.

8. Procédé de formation d'image comprenant les étapes consistant à :
appliquer un liquide de traitement sur un support d'enregistrement ; et
appliquer une composition d'encre sur le support d'enregistrement sur lequel le liquide de traitement a été appliqué,
le liquide de traitement et la composition d'encre étant ceux compris dans l'ensemble d'encre tel que défini dans l'une quelconque des revendications précédentes.

9. Procédé de formation d'image selon la revendication 8, comprenant en outre la fixation thermique d'une image, qui a été formée par l'application de la composition d'encre, sur le support d'enregistrement.

10. Procédé de formation d'image selon la revendication 8 ou 9, dans lequel le support d'enregistrement comprend une couche de revêtement comprenant du carbonate de calcium.
